# FASCICULE DE BREVET EUROPEEN

(11) **EP 3 240 986 B1**
(45) Date de publication et mention de la délivrance du brevet: **17.07.2019**
(21) Numéro de dépôt: 15820508.8
(22) Date de dépôt: 21.12.2015
(51) Int. Cl.: F28F 5/00, B01D 1/06, C02F 1/04, F16B 7/00, F28F 21/06, F28D 7/16, F28D 21/00

(54) **ÉCHANGEUR DE CHALEUR À GAINES FLEXIBLES**
WÄRMETAUSCHER MIT FLEXIBLEN HÜLSEN
HEAT EXCHANGER WITH FLEXIBLE SLEEVES

(30) Priorité: 30.12.2014 FR 1463463
(43) Date de publication de la demande: 08.11.2017
(73) Titulaire: Commissariat à l'Énergie Atomique et aux Énergies Alternatives, 75015 Paris (FR)
(72) Inventeur: BANDELIER, Philippe, 38240 Meylan (FR)
(74) Mandataire: Hautier, Nicolas
(86) Numéro de dépôt international: PCT/EP2015/080721
(87) Numéro de publication internationale: WO 2016/107773

(56) Documents cités:
- EP-A1- 0 192 524
- WO-A1-2006/085792
- FR-A1- 2 243 386
- FR-A1- 2 621 112

## Description

### DOMAINE TECHNIQUE DE L'INVENTION

L'invention concerne le domaine général des échangeurs de chaleur. Elle trouve pour application avantageuse les échangeurs pour concentrer une solution par évaporation.

Un exemple de ce type d'échangeur concerne les évaporateurs-concentrateurs pour eau salée afin d'en extraire de l'eau douce. L'une des applications de l'invention est donc le dessalement de l'eau de mer. Un échangeur de chaleur selon le préambule de la revendication 1 est décrit dans le document FR 2 243 386

### ÉTAT DE LA TECHNIQUE

Plusieurs solutions existent pour concentrer une solution par évaporation. L'une de ces solutions consiste à prévoir des gaines souples verticales intérieurement traversées par de la vapeur. Cette vapeur se condense à l'intérieur de la gaine et transfère une partie de sa chaleur à un deuxième fluide qui ruisselle sur la paroi externe de la gaine. En recevant de la chaleur, ce deuxième fluide, par exemple de l'eau salée, se vaporise en partie. La vapeur ainsi créée peut être condensée ultérieurement pour former de l'eau douce. La portion de deuxième fluide non évaporé présente une concentration augmentée par exemple en sel.

De manière connue, les gaines souples verticales sont fixées à leur extrémité supérieure à une plaque supérieure, munie de trous pour permettre l'introduction de la vapeur dans la gaine. Les parties inférieures des gaines sont également fixées à une plaque inférieure munie d'orifices pour permettre de collecter la vapeur condensée sous cette plaque inférieure, la condensation provenant de l'intérieur des gaines.

Dans ce type d'échangeur à gaines flexibles il est alors nécessaire de prévoir une connexion fluidique entre l'extrémité inférieure de la gaine et l'orifice de collecte.

Les solutions connues sont relativement complexes à mettre en oeuvre. La connexion fluidique est alors délicate à obtenir. On rappellera que les gaines flexibles sont insérées à travers des plaques munies d'orifices et que la connexion fluidique doit être effectuée à travers ces plaques. La facilité de mise en place de la connexion fluidique est donc primordiale.

Certaines solutions prévoient d'insérer à l'intérieur de la gaine une quille munie d'un canal interne pour guider le fluide issu de l'intérieur de la gaine jusqu'à l'orifice de collecte. Il s'avère qu'avec cette solution, en pratique, la quille se détache parfois lors du transport sur le lieu d'assemblage, lors de l'assemblage ou même en fonctionnement, ce qui rend l'échangeur peu fiable. Or la bonne connexion fluidique conditionne directement le rendement de l'installation.

Par ailleurs, il est en pratique très difficile de savoir si une connexion fluidique est défectueuse puisque l'intérieur de l'évaporateur est très difficilement accessible.

Dans d'autres solutions existantes, il s'avère qu'une partie du fluide s'écoulant sur la paroi externe de la gaine parvient à rejoindre le fluide ayant condensé à l'intérieur de la gaine. Cela souille le condensat qui doit être constitué de vapeur d'eau uniquement et entraine par ailleurs, une baisse globale du rendement de l'évaporateur.

Un objectif de la présente invention consiste donc à proposer une solution pour assure une connexion fluidique efficace entre une gaine flexible d'un échangeur à gaines flexibles et un orifice de collecte du fluide s'écoulant dans la gaine.

Les autres objets, caractéristiques et avantages de la présente invention apparaîtront à l'examen de la description suivante et des dessins d'accompagnement. Il est entendu que d'autres avantages peuvent être incorporés.

### RÉSUMÉ DE L'INVENTION

Pour atteindre cet objectif, un aspect de la présente invention concerne un échangeur de chaleur comprenant au moins :
- une gaine, s'étendant principalement selon un axe vertical, formée au moins d'un matériau polymère, l'échangeur étant destiné à faire circuler à l'intérieur de la gaine un premier fluide en partie au moins sous forme de vapeur et pour transférer une partie au moins de la chaleur du premier fluide à un deuxième fluide s'écoulant sur une paroi externe de la gaine, ce transfert de chaleur produisant une condensation d'une partie au moins du premier fluide sur la paroi interne de la gaine et une évaporation d'une partie au moins du deuxième fluide;
- un orifice de collecte verticalement situé sous une extrémité inférieure de la gaine et configuré pour récupérer le premier fluide ayant condensé à l'intérieur de la gaine ;
- un dispositif de connexion fluidique comprenant au moins :
   - une quille comprenant une tête et une tige s'étendant depuis la tête et un canal interne traversant la tête et la tige; la tête étant configurée pour être insérée à l'intérieur d'une extrémité de la gaine ; une extrémité libre de la tige étant destinée à être insérée dans l'orifice de collecte; la quille étant configurée de manière à guider à travers son canal interne le premier fluide condensé s'écoulant depuis l'extrémité de la gaine;
   - une jupe présentant un passage intérieur configuré pour loger ladite extrémité inférieure de la gaine, la jupe étant configurée de manière à ce que le deuxième fluide s'écoulant sur la paroi externe de la gaine s'écoule ensuite sur une paroi externe de la jupe en étant maintenu à distance du canal interne de la quille.

Selon un mode de réalisation, le dispositif de connexion est configuré de manière à serrer la gaine sur une paroi externe de la tête de la quille de manière à assurer la retenue de la quille sur la gaine.

Ainsi, la gaine est serrée sur la tête de la quille, assurant une étanchéité de la gaine par rapport à la quille. Par ailleurs, la quille et la jupe sont suspendues à la gaine. La jupe éloigne de la quille et donc de l'orifice le deuxième fluide s'écoulant sur la paroi externe de la gaine, évitant de ce fait que le deuxième fluide ne parvienne dans la chambre de collecte du condensat.

Ainsi, ce dispositif de connexion fluidique permet une évacuation efficace du condensat formé à l'intérieur des gaines vers une boite de collecte, sans que celui-ci puisse s'échapper du côté où la pression est inférieure.

Selon un mode de réalisation avantageux et optionnel, le dispositif de connexion est conformé de manière à ce que la jupe soit retenue par la quille ou par au moins un élément de butée rapporté sur la quille de manière à empêcher la chute de la jupe par gravité.

Plus précisément, la coopération entre la jupe et la quille permet de s'assurer que le premier fluide présent dans la gaine s'écoule par le canal interne de la quille pour être ensuite collecté dans un orifice de collecte. Par ailleurs, le deuxième fluide qui est contact de la paroi externe de la gaine peut s'écouler le long de la jupe sans s'écouler dans l'orifice de collecte.

La jupe vient simplement coiffer la gaine et la quille. Cela permet d'isoler fluidiquement le fluide s'écoulant à l'extérieur de la gaine et de bloquer la gaine.

Cette connexion est particulièrement fiable et simple à mettre en oeuvre.

Ce dispositif de connexion permet aussi une libre dilatation de chacune des gaines de manière individuelle, sans remettre en cause les différentes fonctions notamment de conduction du condensat, d'étanchéité entre les premier et deuxième fluides à l'état liquide.

De plus, ce dispositif de connexion, par son poids, permet ainsi une mise en tension de la gaine.

Le dispositif de connexion fluidique est particulièrement facile à réaliser par injection plastique, dans un moule simple, donc peu cher et sans opération de reprise.

De manière optionnelle, le dispositif de connexion selon l'invention comprend au moins l'une quelconque des caractéristiques facultatives suivantes prises séparément ou en combinaison :
- le dispositif de connexion est conformé de manière à ce que la quille coopère avec la jupe de manière à empêcher la chute de la jupe par gravité.
- Selon un mode de réalisation, la quille et la jupe portent des parties complémentaires conformées pour coopérer de manière à permettre un clipsage de la jupe avec la quille. Ainsi, la quille et la jupe sont conformées pour coopérer par clipage. Cela permet un assemblage particulièrement simple, rapide et fiable ce qui est très avantageux en particulier dans les évaporateurs qui comprennent chacun plusieurs milliers de gaines.
- Selon un mode de réalisation, la quille et la jupe sont conformées pour coopérer par vissage.
- Selon un mode de réalisation, une paroi interne du passage intérieur de la jupe porte un filetage complémentaire d'un filetage porté par une paroi externe de la quille de manière à ce que la quille et la jupe coopèrent par vissage.
- Selon un mode de réalisation, l'échangeur comprend un élément de butée rapporté sur la quille et qui forme une butée pour la jupe empêchant la chute de la jupe par gravité. Cela permet un assemblage particulièrement simple, rapide et fiable ce qui est très avantageux en particulier dans les évaporateurs qui comprennent chacun plusieurs milliers de gaines.
- Selon un mode de réalisation, l'élément de butée est un joint serrant la gaine de manière étanche sur la quille et sur lequel vient buter la jupe sous l'effet de la gravité. Selon une variante de réalisation, le joint est logé dans une gorge pratiquée dans la tête de la quille et dans lequel une paroi interne du passage intérieur de la jupe comprend une surface, de préférence un chanfrein, configurée pour venir en appui sur le joint. Selon une autre variante de réalisation, le joint est logé dans une gorge pratiquée dans la tête de la quille et dans lequel la quille et la jupe coopèrent par clipsage du joint dans une gorge portée par une paroi interne du passage intérieur de la jupe.
- Selon un mode de réalisation, l'élément de butée est une rondelle dont une face inférieure prend appui sur la quille et dont une face supérieure est au contact de la jupe.
- Selon un mode de réalisation, le dispositif de connexion est conformé de manière à ce que la quille coopère avec la jupe de manière à empêcher la chute de la jupe par gravité.
- Selon un mode de réalisation, le dispositif de connexion est configuré de manière à ce que lorsque la quille et la jupe sont en coopération la gaine est pincée entre une paroi interne de la jupe et une paroi externe de la quille de manière à bloquer la quille et la jupe sur la gaine. Ainsi dans ce mode de réalisation, la fonction de retenue de la quille et de la jupe sur la gaine ainsi que la fonction d'étanchéité sont assurées par le pincement de la gaine entre la quille et la jupe. Ainsi, la jupe et la quille sont retenues sur la gaine. Elles pendent depuis la gaine. Par ailleurs, le pinçage de la gaine assure une étanchéité efficace entre la gaine et la quille d'une part et entre la gaine et la jupe d'autre part.
- Selon un mode de réalisation, l'échangeur comporte au moins un joint rapporté sur l'une parmi la paroi externe de la tête de la quille et une paroi interne du passage intérieur de la jupe, le dispositif étant configuré de manière à ce que à la fois la paroi externe de la gaine et à la fois la paroi interne du passage intérieur de la jupe prennent appui sur le joint.
- Selon un mode de réalisation, le dispositif de connexion comprend au moins un joint configuré de manière à serrer la gaine sur la paroi externe de la tête de la quille de manière à assurer la retenue de la quille sur la gaine.
- Selon un mode de réalisation, la retenue de la quille sur la gaine est assurée uniquement par l'élasticité de la gaine dont la paroi interne s'applique sur la tête de la quille et par ledit joint. Ainsi le joint assure une fonction d'étanchéité entre la quille et la gaine d'une part et entre la jupe et la gaine d'autre part. La quille est ainsi fixée à la gaine de manière simple et particulièrement fiable. On évite ainsi les risques de détachement de la quille.
- Selon un mode de réalisation, on prévoir que ce joint, quel que soit le mode de réalisation de la fixation, assure à lui seul la retenue mécanique de la jupe sur la gaine.
- Selon un mode de réalisation, au moins l'une parmi la paroi externe de la tête de la quille et la paroi interne du passage intérieur de la jupe comprend une gorge de réception du joint.
- Selon un mode de réalisation, la jupe s'étend le long d'une partie au moins du canal interne de la quille, de préférence sur au moins un quart et de préférence au moins un tiers de la longueur du canal interne.
- Selon un mode de réalisation, la jupe présente un diamètre extérieur au moins deux et de préférence au moins trois fois supérieur à celui de la tige de la quille. Ainsi, le deuxième fluide est éloigné du canal interne traversant la tige de la quille.
- Selon un mode de réalisation, la jupe est conformée de manière à assurer une continuité de l'écoulement du deuxième fluide entre la paroi externe de la gaine et une paroi externe de la jupe.
- Selon un mode de réalisation, la jupe présente une extrémité supérieure formant un chanfrein, un bord intérieur du chanfrein s'appliquant sur la paroi externe de la gaine.
- Selon un mode de réalisation, au moins l'une parmi la paroi externe de la tête de la quille et la paroi interne du passage intérieur de la jupe présente une réduction de section de manière à ce que la coopération entre la jupe et la quille fasse entrer en butée la réduction de section avec l'autre parmi la paroi externe de la tête de la quille et la paroi interne du passage intérieur de la jupe.
- La réduction de section est formée par une paroi conique.
- La réduction de section est portée par la paroi externe de la tête de la quille.
- Le diamètre externe de la jupe est supérieur à la section de l'orifice de collecte. La jupe surplombe l'orifice. Ainsi, le deuxième fluide qui s'écoule sur l'extérieur de la jupe ne peut pas rentrer dans l'orifice.
- La paroi interne du passage intérieur de la jupe présente une portion supérieure par laquelle elle coopère avec la tête de la quille et présente une portion inférieure dont la section est à la fois supérieure à la section de la portion supérieure et à la fois supérieure à la section maximale de la quille. Ainsi la quille peut être insérée entièrement dans la jupe au moins jusqu'à la portion supérieure de la jupe.
- La portion supérieure présente une section cylindrique de section constante.
- Le dispositif comporte au moins un joint rapporté sur l'une parmi la paroi externe de la tête de la quille et la paroi interne du passage intérieur de la jupe, le dispositif étant configuré de manière à ce que à la fois la paroi externe de la tête de la quille et à la fois la paroi interne du passage intérieur de la jupe prennent appui sur le joint.
- Le joint est ainsi écrasé entre la paroi externe de la tête de la quille et la paroi interne du passage intérieur de la jupe. Il améliore ainsi l'étanchéité entre la paroi externe de la tête de la quille et la paroi interne du passage intérieur de la jupe. Par ailleurs, il renforce la solidarisation entre la quille et la jupe et évite toute désolidarisation involontaire.
- La jupe est conformée de manière à ce que son poids exerce un effort sur la quille tendant à augmenter le pincement de la gaine entre la quille et la jupe.
- Au moins l'une parmi la paroi externe de la tête de la quille et la paroi interne du passage intérieur de la jupe comprend une gorge de réception du joint. Cette gorge permet de faciliter la mise en position et le maintien en position du joint.
- la paroi externe comprend une gorge de réception du joint et la paroi interne du passage intérieur de la jupe comprend un chanfrein configuré pour venir en appui sur le joint qui serre la gaine sur la paroi externe conique de la tête de la quille.
- De préférence, le diamètre intérieur de la partie plus épaisse de la jupe est choisi de manière à coopérer avec le diamètre extérieur du cône de la quille.
- A la fois la paroi externe de la tête de la quille et la paroi interne du passage intérieur de la jupe comprend une gorge de réception du joint. La coopération entre la quille et la jupe s'effectue par clipsage du joint dans la gorge portée par la paroi interne du passage intérieur de la jupe.
- Optionnellement, le joint est un joint torique.
- La portion inférieure de la jupe s'étend sur une longueur supérieure à la moitié de la longueur de la tige et de préférence sur une longueur supérieure à 80% de la longueur de la tige
- Lorsque la jupe et la quille coopèrent, la tige dépasse du passage intérieur de la jupe.
- la longueur entre l'extrémité inférieure de la tige et l'extrémité inférieure de la jupe est comprise entre 5% et 20% de la longueur de la jupe.
- La jupe comprend au moins un canal traversant sa paroi, de préférence, le canal est incliné en remontant en direction de l'intérieur de la jupe.
- Ce trou oblique positionné en haut de la jupe permet d'équilibrer les pressions de part et d'autre de la paroi empêchant la jupe de flotter en cas de montée du niveau d'eau au pied des tubes. La pente du canal est orientée de manière à remonter vers l'intérieur de la jupe évite que l'eau qui ruisselle le long des gaines puis de la fixation ne pénètre à l'intérieur de celle-ci.

Selon un autre mode de réalisation, l'invention concerne un dispositif de connexion fluidique pour échangeur de chaleur à gaines flexibles, de préférence verticales, comprenant au moins :
- une quille comprenant une tête et une tige s'étendant depuis la tête et un canal interne traversant la tête et la tige; la tête étant configurée pour être insérée à l'intérieur d'une extrémité de la gaine ; une extrémité libre de la tige étant configurée pour être insérée dans un orifice de collecte ; la quille étant configurée de manière à guider à travers son canal interne depuis l'intérieur de la gaine et jusqu'à l'extrémité de pied un fluide s'écoulant depuis l'extrémité de la gaine ;
- une jupe présentant un passage intérieur configuré pour recevoir ladite extrémité de la gaine, la jupe s'étendant le long du canal interne de la quille sur au moins un tiers de la longueur du canal interne ;

De préférence, le dispositif de connexion est configuré de manière à serrer la gaine sur la paroi externe de la tête de la quille.

De préférence, le dispositif de connexion est conformé de manière à ce que la jupe soit retenue par la quille ou par au moins un élément de butée rapporté sur la quille de manière à empêcher la chute de la jupe par gravité.

Selon un mode de réalisation l'invention porte sur un échangeur de chaleur comprenant au moins:
- une gaine flexible verticale formée d'au moins un matériau polymère, l'échangeur étant configuré pour faire circuler un premier fluide à l'intérieur de la gaine et pour transférer une partie au moins de la chaleur du premier fluide à un deuxième fluide situé au contact d'une paroi externe de la gaine, de préférence s'écoulant sur la paroi externe de la gaine, ce transfert de chaleur produisant une condensation du premier fluide sur la paroi interne de la gaine ;
- un orifice de collecte du premier fluide issu de la gaine ;
- un dispositif de connexion fluidique entre la gaine et l'orifice selon l'une quelconque des revendications précédentes, l'échangeur étant configuré de manière à ce que la jupe et la tête de la quille soient suspendues à une extrémité de la gaine et à ce qu'une extrémité de la tige de la quille soit insérée à l'intérieur de l'orifice.

Ce procédé de mise en place est considérablement plus aisé qu'un blocage par vissage par exemple. Cette connexion est particulièrement fiable et simple à mettre en oeuvre. Par ailleurs, le coût pour réaliser les moules de ces pièces simples est réduit.

De manière optionnelle, l'échangeur selon l'invention comprend au moins l'une quelconque des caractéristiques facultatives suivantes prises séparément ou en combinaison :
- l'échangeur est configuré pour permettre, sous l'effet de la dilatation de la gaine, un déplacement relatif entre la quille et l'orifice de collecte le long d'un axe selon lequel la gaine s'étend principalement.
- l'échangeur est configuré pour permettre une translation verticale de la quille à l'intérieur du tube sous l'effet de la dilatation de la gaine.
- La gaine est en polymère.
- La gaine présente une longueur d'au moins 2 et de préférence d'au moins 3 mètres.
- Avantageusement, la gaine présente un diamètre externe compris entre 15 entre 60 millimètres (10-3 mètres) et de préférence entre 25 et 40 millimètres et de préférence de l'ordre de 30 millimètres.
- la gaine présente une épaisseur comprise entre 25 et 200 micromètres (10-6 mètres) et de préférence et 50 et 100 micromètres. La gaine permet ainsi un bon échange de chaleur entre les premier et deuxième fluides. Ainsi, la gaine est souple. Cet échangeur est particulièrement bien adapté aux températures de fonctionnement basses, typiquement inférieures à 80°C.
- La gaine est de préférence pendue verticalement.
- En fonctionnement la pression à l'intérieur de la gaine est légèrement supérieure à la pression régnant à l'extérieur de la gaine. Cela permet à la gaine de conserver sa forme, typiquement une forme de section circulaire. La gaine est ainsi flexible, mobile mais présente tout de même une certaine rigidité.
- Cet échangeur est particulièrement bien adapté aux températures de fonctionnement basses, typiquement inférieures à 80°C.
- Par ailleurs l'invention permet une libre dilatation de chacune de la gaine, de manière individuelle, sans remettre en cause les différentes fonctions notamment de conduction du condensat, d'étanchéité entre les premier et deuxième fluides à l'état liquide, et ceci quand bien même la dilatation est importante, par exemple de plusieurs pourcents.
- L'orifice est formé par une entrée d'un tube.
- Le tube présente une sortie en communication avec une chambre de collecte.
- La chambre de collecte est délimitée par une plaque inférieure munie d'au moins un trou, à l'intérieur duquel est inséré le tube et par une enceinte.
- l'échangeur est configuré pour permettre un déplacement relatif entre la quille et le tube, de préférence selon un axe d'extension principale de la gaine, sous l'effet de la dilatation de la gaine.
- L'échangeur comprend une bague rapportée sur une pièce prise parmi la quille et le tube, la bague étant configurée pour définir avec l'autre parmi la quille et le tube un passage de fuite pour l'évacuation d'une partie du premier fluide non condensé provenant de la quille.
- La quille coulisse dans le tube et c'est le jeu entre les deux qui calibre la fuite de vapeur. La bague fendue rapportée, de préférence par clipsage sur la tige de la quille impose une valeur de jeux entre la bague et le tube pour calibrer la fuite. Pour obtenir différents réglages, il suffit alors de réaliser des jeux de bagues aux bonnes dimensions. Vu la simplicité de la géométrie des bagues, elles sont fabriquées par injection dans un moule très simple et peu coûteux, qui peut comporter un grand nombre d'empreintes.
- Les dimensions de la bague sont choisies pour calibrer le débit de fuite entre le bord extérieur de la bague et ladite pièce. Le jeu peut varier de quelques dixièmes de millimètre à un millimètre.
- l'extrémité supérieure de la quille est insérée dans l'extrémité inférieure de la gaine.
- la bague et/ou ladite pièce prise parmi la quille et le tube sur laquelle est rapportée la bague présente au moins une zone de déformation pour faciliter la fixation par déformation radiale élastique de la bague sur ladite pièce.
- La bague comprend au moins une fente s'étendant sur toute une hauteur de la bague, de manière à permettre par déformation élastique, une augmentation ou une réduction du diamètre de la bague.
- ladite pièce prise parmi la quille et le tube sur laquelle est rapportée la bague comprend une gorge de réception de la bague.
- La bague est configurée pour se clipser sur ladite pièce prise parmi la quille et le tube sur laquelle est rapportée la bague.
- Selon un mode de réalisation, la bague est rapportée sur la quille et le passage de fuite est défini par une paroi externe de la bague et une paroi interne du tube.
- La bague présente une extrémité inférieure présentant un chanfrein.
- Cela permet de facilité l'insertion de la bague à l'intérieur du tube.
- Le tube présente une réduction de diamètre intérieur et l'échangeur est configuré de manière à ce que la réduction de diamètre intérieur fasse office de butée pour limiter la course en translation de la bague à l'intérieur du tube.
- La réduction de diamètre intérieur est formée par une extrémité supérieure du tube munie d'un rebord s'étendant vers l'intérieur du tube.
- alternativement, la bague est rapportée sur le tube et le passage de fuite est défini par une paroi interne de la bague et une paroi externe de la quille. La bague fendue peut être remplacée par un manchon en élastomère qui est enfilé sur la partie cylindrique de la quille.

Selon un mode de réalisation l'invention porte sur un procédé d'assemblage d'un dispositif de connexion fluidique selon l'invention sur une gaine d'échangeur de chaleur. Le procédé comprend les étapes suivantes :
- enfiler la jupe sur une extrémité de la gaine à travers le passage interne de la jupe ;
- rendre libre l'accès à l'extrémité de la gaine ;
- insérer la tête de la quille à l'intérieur de la gaine ;
- ramener la jupe sur la tête de la quille jusqu'à faire coopérer la quille et la jupe de manière à empêcher la chute de la jupe par gravité.

De manière optionnelle, le procédé selon l'invention comprend au moins l'une quelconque des caractéristiques facultatives suivantes prises séparément ou en combinaison :
- on ramène la jupe sur la tête de la quille jusqu'à pincer la gaine entre la jupe et la quille.
- Pour ramener la jupe sur la quille on fait coulisser la jupe le long de la quille pour ramener la jupe sur la tête de la quille jusqu'à pincer la gaine entre la jupe et la quille.
- Après l'étape d'insertion de la tête de la quille à l'intérieur de la gaine et avant de ramener la jupe sur la tête de la quille, disposer un joint torique sur la paroi externe de la quille.
- Dans lequel au cours de l'étape consistant à ramener la jupe sur la tête de la quille, on déplace la jupe par rapport à la quille jusqu'à ce que le joint se loge dans une gorge pratiquée dans la paroi interne du passage intérieur de la jupe.

Selon un mode de réalisation, l'invention porte sur l'utilisation d'un échangeur selon l'invention pour dessaler de l'eau salée.

Selon un mode de réalisation, l'invention porte sur un évaporateur de solution comprenant une pluralité d'échangeurs selon l'invention, la pluralité d'échangeurs formant de préférence un faisceau ou un film d'échangeurs.

De manière optionnelle, l'évaporateur selon l'invention comprend au moins l'une quelconque des caractéristiques facultatives suivantes prises séparément ou en combinaison :
- L'évaporateur comprend une enceinte définissant avec la paroi externe de la gaine une chambre d'évaporation et définissant avec une plaque inférieure connectée au tube une chambre de collecte du premier fluide condensé.
- L'évaporateur est configuré de manière à ce qu'en entrée de tube, le premier fluide comprenne au moins 80% de vapeur d'eau.
- L'évaporateur est configuré de manière à ce que le deuxième fluide soit un liquide qui s'écoule par gravité sous forme d'un film le long de la paroi externe de la gaine. Le deuxième fluide est de l'eau salée.

Selon un mode de réalisation, l'invention porte sur un système de concentration de solution comprenant une pluralité d'évaporateurs selon l'invention.

Selon un mode de réalisation optionnel, les évaporateurs sont disposés en série, une sortie sous forme de vapeur du deuxième fluide d'un premier évaporateur étant injectée comme premier fluide dans un deuxième évaporateur monté en série avec le premier évaporateur.

### BRÈVE DESCRIPTION DES FIGURES

Les buts, objets, ainsi que les caractéristiques et avantages de l'invention ressortiront mieux de la description détaillée d'un mode de réalisation de cette dernière qui est illustré par les dessins d'accompagnement suivants dans lesquels :
- La figure 1 illustre un exemple d'un évaporateur de solution équipé de plusieurs échangeurs selon l'invention.
- La figure 2 illustre un exemple de système d'évaporation-concentration de solution comprenant plusieurs étages, formé chacun par un évaporateur illustré en figure 1.
- La figure 3 comprend les figures 3a et 3b. Ces figures 3a et 3b illustrent la partie inférieure d'un échangeur selon l'invention, avec une vue détaillée d'un dispositif de connexion fluidique entre la gaine et un tube définissant un orifice. La figure 3a illustre cet échangeur dans une configuration dans laquelle la gaine est faiblement dilatée. La figure 3b illustre cet échangeur dans une configuration dans laquelle la gaine est fortement dilatée.
- La figure 4 illustre un exemple de quille d'un échangeur selon l'invention.
- La figure 5 illustre un exemple de jupe d'un échangeur selon l'invention.
- La figure 6 illustre un mode de réalisation dans lequel la quille retient la jupe par un joint qui est monté sur la quille et qui enserre la gaine sur la quille.
- La figure 7 illustre un mode de réalisation dans lequel la quille coopère par clipsage avec la jupe en amenant dans une gorge de la jupe un joint qui enserre la gaine sur la quille.
La figure 8 illustre un exemple de tube selon l'invention.
- La figure 9 illustre un exemple de bague selon l'invention.
- La figure 10 est une vue agrandie de la coopération entre la quille, la bague et le tube selon un mode de réalisation de l'invention.
- La figure 11 est une vue agrandie de la coopération entre la quille, la bague et le tube selon un autre mode de réalisation de l'invention.
- La figure 12 illustre un autre mode de réalisation de la tête de quille selon l'invention.
- La figure 13 illustre un mode de réalisation dans lequel la quille coopère par clipsage avec la jupe en pinçant la gaine entre la quille et la jupe.
- La figure 14 illustre un mode de réalisation dans lequel la quille coopère par clipsage avec la jupe et dans lequel la gaine est serrée sur la quille par un joint.
- La figure 15 illustre un mode de réalisation dans lequel la quille coopère avec la jupe par l'intermédiaire d'un élément de butée sur lequel la jupe prend appui et dans lequel la gaine est serrée par un joint sur la quille.
- La figure 16 illustre un mode de réalisation dans lequel la quille coopère avec la jupe par vissage en pinçant la gaine entre la quille et la jupe.

Les dessins sont donnés à titre d'exemples et ne sont pas limitatifs de l'invention. Ils constituent des représentations schématiques de principe destinées à faciliter la compréhension de l'invention et ne sont pas nécessairement à l'échelle des applications pratiques. En particulier les épaisseurs et diamètres ne sont pas nécessairement représentatifs de la réalité.

### DESCRIPTION DÉTAILLÉE DE L'INVENTION

Une gaine s'étend selon une direction principale. Dans le cadre de la présente invention on mesure une hauteur ou une longueur selon la direction d'extension principale de la gaine. L'épaisseur d'une pièce et la section d'un passage ou d'une pièce sont quant à elles mesurées selon une direction transversale, c'est-à-dire selon une direction perpendiculaire à la direction d'extension principale de la gaine. De préférence, les gaines pendent à la verticale. Dans ce cas, les hauteurs et les longueurs sont donc mesurées selon la verticale. L'épaisseur et la section d'un passage ou d'une pièce sont mesurées selon la direction horizontale.

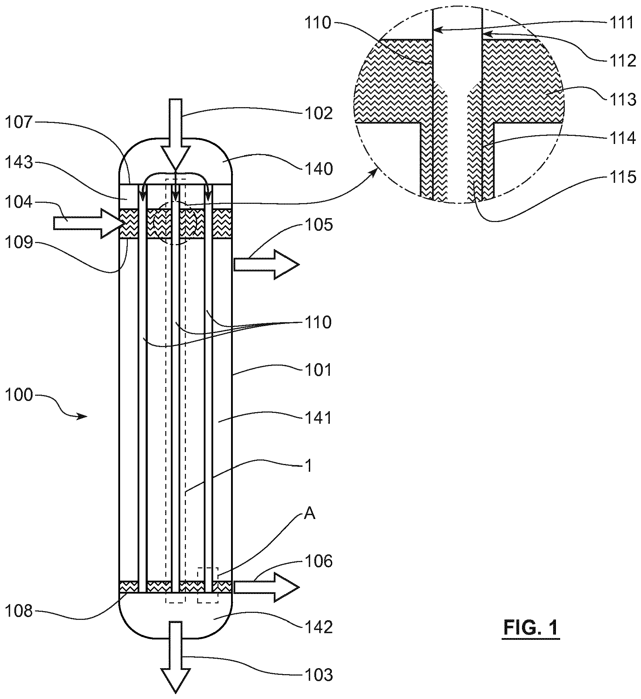

En référence à la figure 1, un évaporateur 100 de solution pouvant intégrer plusieurs échangeurs 1 selon l'invention va maintenant être détaillé.

L'évaporateur 100 comprend une enceinte 101 étanche à l'intérieur de laquelle plusieurs chambres sont présentes.

Une chambre 140 d'introduction du premier fluide située en partie supérieure de l'enceinte 101. Selon un exemple non limitatif le premier fluide est de la vapeur d'eau. Cette vapeur est introduite par une entrée 102. Cette chambre 140 d'introduction de la vapeur d'eau est délimitée par la paroi interne de l'enceinte 101 et une plaque supérieure 107 munie d'orifices à l'intérieur desquels sont insérées des gaines 110.

Chaque gaine 110 s'étend de préférence verticalement depuis la plaque supérieure 107 jusqu'à une plaque inférieure 108 également munie d'orifices pour faire communiquer l'intérieur de chaque gaine 110 avec une chambre 142 de collecte du condensat, cette chambre 142 étant définie par la paroi interne de l'extrémité inférieure de l'enceinte 101 et la plaque inférieure 108.

Une plaque additionnelle désignée plaque de formation du ruissellement 109 est disposée sous la plaque supérieure 107 et définit avec cette dernière une chambre 143 d'introduction du deuxième fluide à concentrer par évaporation. Selon un exemple non limitatif, ce deuxième fluide est de l'eau salée 113.

Une entrée 104 permet l'introduction du deuxième fluide depuis l'extérieur de l'enceinte 101. La plaque de formation du ruissellement 109 est configurée de manière à ce que le deuxième fluide ruisselle sur la paroi externe 112 de chaque gaine 110, de préférence sous forme d'un film 114 mince, couvrant préférentiellement toute la surface de la paroi externe 112 de la gaine 110.

L'enceinte 101 délimite avec la plaque de formation du ruissellement 109 et avec la plaque inférieure 108, une chambre intermédiaire désignée chambre d'évaporation 141.

La vapeur introduite à l'intérieur des gaines 110 depuis la chambre 140 parcourt la gaine, dans cet exemple dans le sens de la gravité, ce qui a pour effet de provoquer un échange de chaleur entre les premier et deuxième fluides à travers la paroi de la gaine 110.

La vapeur transfère une partie de sa chaleur au deuxième fluide qui ruisselle sur la paroi externe 112 de la gaine 110. Cela a pour conséquence de condenser la vapeur sur la paroi interne 111 de la gaine, augmentant encore de ce fait le transfert thermique puisque le coefficient de transfert thermique entre la vapeur condensée et le deuxième fluide est meilleur qu'entre la vapeur gazeuse et le deuxième fluide.

Par ailleurs, la condensation est un changement d'état exothermique qui dégage de la chaleur dont une partie est transférée au deuxième fluide.

La vapeur condensée 115, désignée également condensat, s'écoule à l'intérieur de la gaine 110 jusqu'à parvenir dans la chambre de collecte 142 à l'intérieur de laquelle débouchent les gaines 110. De l'eau douce peut alors être extraite de cette chambre de collecte 142 par la sortie 103.

Le premier fluide qui ruisselle sous forme de film 114 le long de la gaine 110, se vaporise au fur et à mesure qu'il emmagasine de la chaleur provenant de l'intérieur de la gaine 110. Ce deuxième fluide se sépare alors en une phase gazeuse, sous forme de vapeur d'eau typiquement et une phase liquide, dont la concentration est plus élevée que lors de son introduction dans la chambre 143. La vapeur ainsi produite est récupérée par une sortie de vapeur 105. La solution plus concentrée, désignée saumure, lorsque le deuxième fluide est de l'eau salée extraite de l'enceinte 101 par une sortie 104.

Il faut naturellement que les pressions dans l'évaporateur soient réglées de manière à ce que le premier fluide parcoure la gaine 110 dans le sens souhaité. La pression régnant à l'intérieur des gaines 110 est plus importante que celle régnant dans la chambre d'évaporation 141. Ainsi, chaque gaine 110 forme un échangeur de chaleur pour évaporateur-concentrateur du deuxième fluide, par exemple une solution d'eau salée.

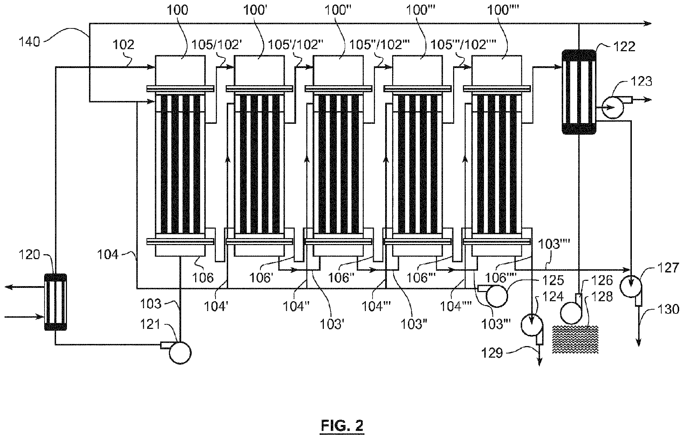

La figure 2 illustre un système de concentration de solution comprenant plusieurs évaporateurs 100, 100', 100", 100"', 100"" disposés en série, chaque évaporateur pouvant être identique à celui illustré en figure 1.

Chaque évaporateur 100-100"" forme un étage d'évaporation-concentration. De manière avantageuse, la vapeur produite à partir du deuxième fluide par un étage est injectée dans l'étage suivant comme vapeur (premier fluide).

Plus en détail, un premier évaporateur 100 reçoit en entrée 102 de la vapeur provenant d'un générateur de vapeur issue d'une source chaude 120. Ce premier évaporateur 100 reçoit par l'entrée 104, le deuxième fluide, typiquement de l'eau salée.

L'eau issue de la condensation de la vapeur à l'intérieur de la gaine est extraite par la sortie 103 pour être renvoyée au générateur de vapeur 120.

La vapeur produite à l'évaporateur 100 et extraite par la sortie 105 pour être introduite par l'entrée 102' de l'évaporateur 100'.

La vapeur condensée extraite par la sortie 103' de l'évaporateur 100' est récupérée dans un réservoir de l'évaporateur 100" et ainsi de suite jusqu'au circuit d'eau douce 130.

La solution concentrée, ou saumure, collectée après un évaporateur chemine dans l'évaporateur suivant jusqu'au circuit saumure 129 de solution concentrée. De préférence, c'est ce circuit 129 de solution concentrée qui fournit la solution à évaporer-concentrer en entrée des évaporateurs 100-100"", après ajout d'un appoint de solution à concentrer 140

Sur le système illustré en figure 2, les cinq évaporateurs 100-100"" sont disposés en série.

La sortie de vapeur 105"" du dernier évaporateur 100"" est injectée dans un condenseur final 122 alimenté par la solution 128 à concentrer, typiquement de l'eau de mer. De la solution 128 réchauffée, on prélève l'appoint 140. On chauffe une solution 128, de préférence moins concentrée que la solution 129, afin d'extraire de l'eau douce de cette solution 128.

Des pompes 124-127 permettent la mise en circulation des différents fluides. Un extracteur d'air 123 permet de collecter et d'extraire les incondensables qui ont été canalisés jusqu'au condenseur final 122. Selon un exemple non limitatif dans lequel le fluide à évapo-concentrer est de l'eau salée, la solution 128 est de l'eau de mer, comprenant par exemple 35g de sel par litre, le circuit 129 est une solution plus concentrée en sel, typiquement 70 g/l.

La source chaude 120 produit de la vapeur à moins de 80°C.

De manière avantageuse, la saumure issue de chaque évaporateur 100-100"" est récupérée dans le circuit 129 est partiellement réinjectée comme deuxième fluide dans chacun des évaporateurs par la pompe 125. On notera que pour que chaque étage d'évaporation-condensation fonctionne, il faut atteindre, au sein des chambres d'évaporation de chaque évaporateur, le point d'évaporation du deuxième fluide. Or, la température baisse d'un étage à l'autre puisque le seul apport de chaleur est fourni par la source d'eau chaude 120.

Il est donc nécessaire que la pression régnant dans les chambres d'évaporation décroisse d'étage en étage. Dans chaque évaporateurs 100-100"", l'évaporation s'effectue à une température et à une pression inférieures à celles des évaporateurs précédents. Par ailleurs, il est nécessaire que les flux de vapeur parcourent sans difficulté l'ensemble des étages afin de ne pas réduire le rendement du système.

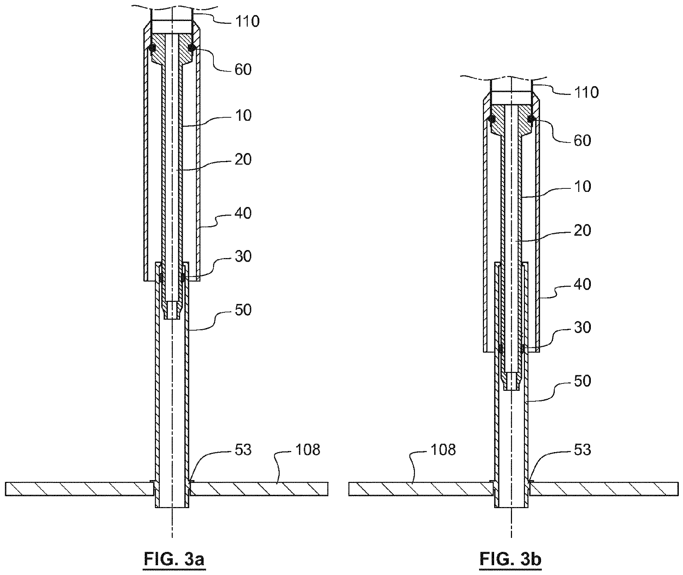

Le dispositif de connexion fluidique qui va maintenant être décrit en détail en référence aux figures 3 à 10 permet de conserver un bon écoulement des flux à travers chaque étage et améliore ainsi le rendement de chaque évaporateur et le rendement global du système.

Les figures 3 a et 3b illustrent un exemple du dispositif de connexion fluidique complet entre une gaine 110 et un tube 50. Ces figures représentent une vue agrandie de la zone A référencée en figure 1.

Le dispositif de connexion fluidique est spécialement avantageux pour les gaines 110 présentant un coefficient de dilatation thermique ou un fluage important. Tel est le cas des gaines en polymère dont le coefficient de dilatation thermique est compris entre 5 et 10.10⁻⁵. Par ailleurs, les gaines en polymère sont souvent sujettes à un certain fluage, c'est-à-dire une déformation plastique, sous l'effet de leur poids par exemple. Ces gaines présentent pour avantage d'être inertes chimiquement avec les solutions à concentrer, notamment avec de l'eau salée, contrairement aux tubes en métal.

Comme leur coefficient de conduction thermique est faible, bien inférieur à celui des gaines en métal, il est nécessaire de prévoir une épaisseur de paroi très faible. Dans le cadre de l'invention, l'épaisseur de la paroi de la gaine est typiquement comprise entre 25 et 200 micromètres (10⁻⁶ mètres) et de préférence entre 50 et 100 µm et de préférence de l'ordre de 50µm. Une telle épaisseur rend la gaine très souple, flexible.

En solidarisant l'extrémité supérieure de la gaine 110 par exemple à la plaque supérieure 107, la gaine 110 pend à la verticale sous l'effet de son poids. Le film 114 d'eau salée peut ainsi ruisseler par gravité tout le long de la gaine 110.

On prévoit que l'extrémité inférieure de la gaine 110 soit solidaire d'une quille 10 du dispositif de connexion fluidique. La quille 10 s'étend principalement selon la direction d'extension de la gaine 110, c'est-à-dire dans cet exemple selon la direction verticale. La quille 10 présente un canal interne 20 dont une entrée supérieure débouche à l'intérieur de la gaine 110 et dont une sortie débouche à l'intérieur d'un orifice 55 de collecte.

Selon un mode de réalisation non illustré, l'orifice de collecte est défini par un trou dans une plaque, typiquement la plaque inférieure 108.

De façon préférée mais non limitative, l'orifice 55 de collecte est formé par l'extrémité d'un tube 50.

Dans la description qui suit toutes les caractéristiques présentées s'appliquent à chacun des deux modes de réalisation mentionnés ci-dessus (orifice de collecte formé par une plaque ou orifice de collecte formé par l'extrémité d'un tube).

Le tube 50 présente une zone de fixation 53 par lequel il est fixé sur la plaque inférieure 108 dont la face inférieure délimite avec l'enceinte 101 la chambre de collecte 142 du condensat, typiquement l'eau douce. Le tube 50 est fixé à la plaque 108 de manière étanche, c'est-à-dire qu'aucun fluide ne peut s'introduire entre la paroi externe du tube 50 et la plaque inférieure 108.

Ainsi, la vapeur condensée parvenant en extrémité inférieure de la gaine 110 s'introduit dans le canal 20 de la quille 10 puis parvient, en sortie de canal 20 à l'intérieur de l'orifice 55 de collecte (et donc du tube 50) avant d'arriver dans la chambre de collecte 142 du condensat.

La quille 10 et la gaine 110 sont liées de manière étanche, c'est-à-dire que le premier fluide situé à l'intérieur de la gaine 110 ne peut pas passer entre la paroi interne de la quille 10 et la paroi interne 111 de la gaine 110. Ce premier fluide ne peut que passer dans le canal 20.

A cet effet, on prévoit que la quille 10 soit emmanchée à l'intérieur de la gaine 110. Ainsi, la paroi externe 13 de la quille 10 est au contact de la paroi interne 111 de la gaine 110.

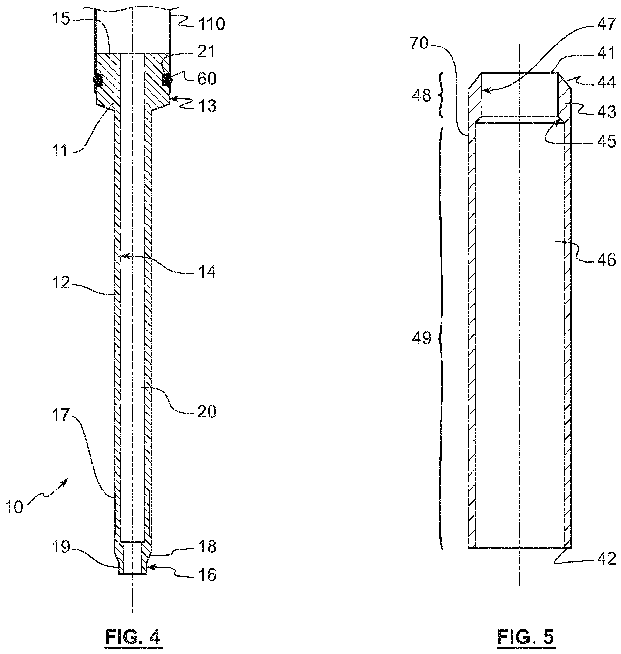

Selon le mode de réalisation illustré en figure 4, la quille 10 présente une tête 11 et une tige 12. Le canal 20 s'étend à travers la tête 11 et la tige 12 et présente un diamètre, également désigné section de passage. Le canal présente un diamètre constant le long de l'écoulement du condensat. De préférence il présente une légère dépouille pour être démoulée facilement si la quille est obtenue par moulage par injection. La tête 11 présente un diamètre externe correspondant sensiblement au diamètre interne de la gaine 110. Si la gaine 110 n'est pas élastique radialement, on prévoit une tolérance pour permettre l'insertion de la tête 11 de quille 10 à l'intérieur de la gaine 110. La longueur de la tête 11, c'est-à-dire la dimension de la tête 11 prise selon la direction d'extension de la quille 10, correspond sensiblement à la profondeur d'insertion de la quille 10 dans la gaine 110.

De préférence, la paroi externe de la tige 12 de la quille 10 est sensiblement constant, sauf à son extrémité inférieure 16 comme cela sera décrit en détail par la suite. De préférence la paroi externe de la tige 12 présente une légère dépouille pour être démoulée facilement si la quille est obtenue par moulage par injection.

Selon un mode de réalisation avantageux, la paroi externe 13 de la tête 11 est conique, la section de cette paroi externe 13 se réduisant à l'approche de l'extrémité supérieure 15 de la tête 11. Cette conicité est destinée à faciliter le montage de la quille 10 dans la gaine 110 et à adapter l'enfoncement de la quille 10 pour compenser la dispersion de diamètre de la gaine 110. Un autre avantage conféré par cette conicité sera décrit en détail par la suite.

Pour un enfoncement de 20 mm de la quille 10 dans la gaine 110, on prévoit une réduction de diamètre de la paroi externe 13 de la tête 11 comprise entre 0,5 et 1,5 mm et de préférence de l'ordre de 0,9 mm.

Avantageusement, une légère dépouille est prévue entre la tête 11 et la tige 12 pour faciliter le démoulage de la quille 10 fabriquée de préférence par injection.

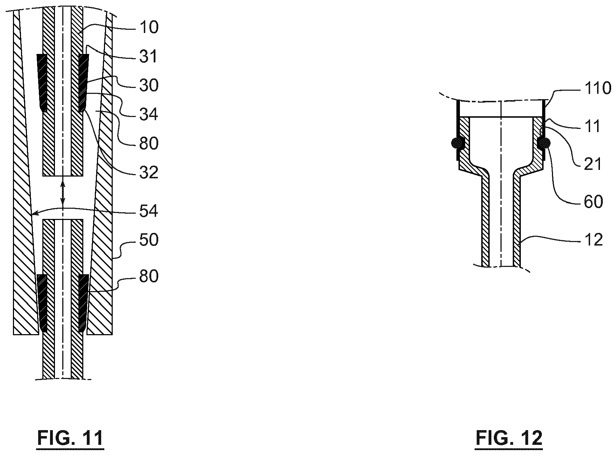

Selon un mode de réalisation privilégié et illustré en figure 12, l'épaisseur de la tête 11 est amincie par exemple pour économiser de la matière ou réduire le poids pesant en extrémité de la gaine 110.

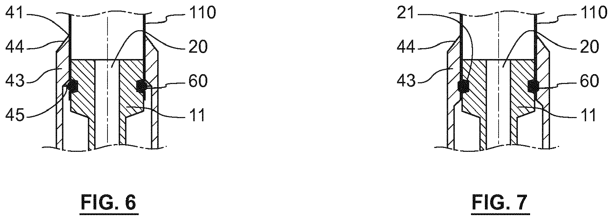

Selon un mode de réalisation avantageux illustré en figures 6, 7, 14, 15, un joint 60 est enfilé autour de la paroi externe 112 de la gaine 110 au niveau de la tête 11 de la quille 10. Le joint 60, de préférence un joint torique, enserre ainsi à la fois la quille 10 et la gaine 110.

Le joint 60 assure l'étanchéité entre l'intérieur de la gaine 110 et le canal 22 de la quille 10.

Comme cela sera décrit en détail par la suite, ce joint 60 peut assurer uniquement la fonction d'étanchéité.

De manière particulièrement avantageuse et optionnelle, ce joint 60 assure la retenue de la quille 10 sur la gaine 110. Avantageusement, la fixation de la quille 10 à la gaine 110 est assurée uniquement par ce joint 60 qui enserre la gaine 110 sur la quille 10. Selon un autre mode de réalisation, la gaine 110, en partie élastique, exerce un effort de compression autour de la tête de la quille 10 et renforce ainsi la fixation de cette dernière.

Selon encore un autre mode de réalisation, le joint 60 assure la retenue d'une jupe 40 sur la quille 10. Un même joint 60 peut assurer l'une seulement de ces fonctions ou chacune de ces fonctions.

De préférence et comme illustré sur les figures 6, 7, 14, 15, la tête 11 de la quille 10 comporte une gorge 21 conformée pour loger en partie le joint 60. La gorge permet ainsi de positionner plus aisément le joint 60 autour de la quille 10 et d'éviter un retrait involontaire.

Selon un mode de réalisation privilégié et illustré sur les figures 3a, 3b et 5, le dispositif de connexion fluidique comporte une jupe 40. La jupe 40 présente une forme générale de tube dont la section peut être constante ou non. Dans l'exemple illustré, la jupe 40 présente une section extérieure sensiblement constante. Elle présente un passage intérieur 42 de section supérieure au corps 12 de la quille 10.

La jupe 40 est configurée pour être solidarisée sur l'extrémité inférieure de la gaine 110 au niveau de la quille 10.

Ainsi, la jupe 40 et la quille 10 pendent à l'extrémité de la gaine 110. Elles tendent ainsi à maintenir la gaine en position verticale et elles accompagnent la gaine lors des dilatations de cette dernière.

Selon un mode de réalisation avantageux, l'extrémité supérieure de la jupe 40 présente une paroi inclinée 44 formée par un chanfrein. La paroi inclinée 44 s'étend depuis l'intérieur de la jupe 40, au contact de la paroi externe 112 de la gaine 110, et descend jusqu'à la paroi externe de la jupe 40. Cette paroi inclinée 44 permet de conserver la continuité du film 114 ruisselant le long de la jupe 40.

Avantageusement, cette paroi inclinée 44 et le chanfrein forment des dépouilles qui facilitent le démoulage de la jupe 40 lors de sa fabrication.

Comme illustré en figures 3a et 3b, la jupe 40 coiffe également l'extrémité supérieure du tube 50. Plus précisément, la jupe 40 s'étend suffisamment pour recouvrir l'extrémité supérieure du tube 50, et ceci, de préférence quelle que soit la dilatation de la gaine 110 : ainsi l'extrémité inférieure de la jupe 40 est verticalement située sous l'orifice 55 d'entrée du tube 50.

Par conséquent, le deuxième film qui ruisselle sur la paroi externe 112 de la gaine 110 s'écoule ensuite sur la paroi externe de la jupe 40 puis tombe par gravité dans le fond de la chambre d'évaporation 141, par exemple sur la face supérieure de la plaque inférieure 108. Ce deuxième fluide ne peut pas s'introduire dans l'orifice 55 du tube 50.

Cette configuration permet aussi une étanchéité parfaite de la chambre 142 de collecte du condensat.

Sur l'exemple illustré en figure 3 (figure 3a et 3b), la gaine mesure entre 3 et 4 mètres de long, une épaisseur comprise entre 50 et 100µm, la quille et la jupe présentent respectivement une hauteur de 206 et de 190mm. La dilatation de la gaine est de l'ordre de 50 mm en fonctionnement. Quelle que soit la dilatation de la gaine, la jupe 40 coiffe l'orifice 55 d'entrée du tube 50.

De préférence, la jupe 40 présente un diamètre externe au moins deux et de préférence au moins trois fois supérieur à celui de la tige 12 de la quille 10. Ainsi, le deuxième fluide est éloigné du canal interne traversant la tige de la quille. Sur l'exemple illustré en figure 3 (figure 3a et 3b), le diamètre externe de la jupe 40 est de 38mm et celui de la tige 12 de la quille 10 et de 14mm.

La solidarisation de la jupe 40 avec la quille 10 ainsi que la fixation de la quille 10 à la gaine 110 peuvent être effectuées selon plusieurs modes de réalisation.

Des premiers modes de réalisation vont maintenant être décrits en détail en référence aux figures 3a, 3b, 4, 5, 6 et 7.

Comme illustré en figure 3a, la jupe 40 coiffe à la fois la gaine 110 et la quille 10. Elle présente un passage intérieur dont les dimensions ou la forme sont conformées pour coopérer avec la tête 11 de la quille 10 de manière à venir pincer la gaine 110 entre la jupe 40 et la quille 10.

En outre, les parois complémentaires de la jupe 40 et de la quille 10 sont conformées de manière à ce que le poids de la jupe 40 tende à rapprocher la jupe 40 de la quille 10 et à augmenter l'effort du pincement entre ces deux pièces.

La paroi interne 47 de la jupe 40 comprend une portion supérieure 48 présentant une section transversale inférieure au diamètre externe du joint 60 et comprend une portion inférieure 49 présentant une section transversale augmentée. La section de la portion inférieure 49 est supérieure à la section transversale de la tête 11 de la quille 10. Une paroi interne conique 45 vers le bas assure une jonction entre les portions supérieure 48 et inférieure 49. De préférence, la réduction de section de la portion supérieure 47 est formée par une surépaisseur 43 de la jupe 40.

Le joint torique 60 présente un diamètre compris entre les sections des portions supérieure 48 et inférieure 49. Ainsi, le joint 60 torique vient s'appliquer contre la paroi interne conique 45.

Ce mode de réalisation est illustré en figure 6. La gaine 110 se trouve pincée entre la quille 10 dont la tête 11 appuie sur la paroi interne 111 de la gaine 110 et la jupe 40 qui appuie contre la paroi externe 112 de la gaine 110. On obtient ainsi une fixation simple à mettre en oeuvre et qui est particulièrement fiable.

La gorge 21 pratiquée dans la quille 10 et le joint 60 torique qui forme une butée pour empêcher la translation de la jupe 40 vers le bas par gravité renforcent la fiabilité de cette fixation.

Selon un mode de réalisation, la fixation de la jupe 40 et de la quille 10 sur la gaine 110 comprend les étapes suivantes :
- insertion de la gaine 110 à l'intérieur des passages intérieurs des parties 48 et 49 de la jupe 40 ; cette insertion peut être réalisée depuis l'une quelconque des extrémités supérieure ou inférieure de la gaine 110, de préférence depuis l'extrémité inférieure.
- désengagement de l'extrémité inférieure de la gaine 110 pour la rendre accessible. Cela peut être effectué en repoussant vers le haut la jupe 40 ;
- insertion de la tête 11 de la quille 10 à l'intérieur de la gaine 110, cette insertion étant facilitée par la forme conique de la tête 11 ;
- insertion du joint 60 dans la gorge 21 de la tête 11 ;
- descente de la jupe 40 pour coiffer la tête 11 de la quille 10 et jusqu'à ce que la paroi interne 47 de la jupe 40 vienne en butée sur le joint 60.

Cette butée est la paroi interne conique 45 dans le mode de réalisation illustré en figure 6.

Cette butée est la gorge pratiquée dans la paroi interne 47, comme illustré en figure 7.

De préférence, l'ensemble ainsi assemblé est ensuite introduit dans l'évaporateur 100 à travers les plaques 107, 108, 109. Cette fixation des différents éléments est particulièrement simple et fiable. On peut notamment passer ce dispositif de connexion fluidique à travers les différentes plaques et tubes. Par ailleurs, il est aisément démontable ce qui peut être avantageux pour la maintenance de l'échangeur.

La solution proposée est particulièrement simple et avantageuse. En effet, avec la solution selon l'invention, la gaine 110 est fixée sur la quille 10 et la jupe 40 vient simplement coiffer le tout, la fonction de blocage de la gaine étant assurée par la simple coopération par appui entre la jupe 40 et la quille 10. L'ensemble est donc plus facile à réaliser par injection plastique, dans un moule simple. L'obtention de ces pièces est donc moins chère et ne nécessite pas d'opération de reprise.

Selon un mode de réalisation illustré en figure 7, la paroi interne 47 de la portion supérieure 48 de la jupe 40 comporte également une gorge conformée pour recevoir le joint 60. Dans ce mode de réalisation, la jupe 40 et la quille 10 sont déplacées l'une par rapport à l'autre jusqu'à ce que le joint 60, placé au préalable dans la gorge 21 de la quille 10 s'insère dans la gorge de la jupe 40. De préférence, cet emmanchement est un emmanchement doux.

Ainsi, on obtient une coopération de la jupe 4à sur la quille 10 par clipsage.

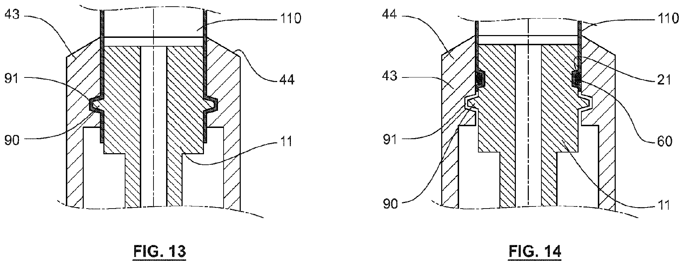

Un autre mode de réalisation de la fixation entre la quille 10 et la jupe 40 va maintenant être décrit en référence à la figure 13.

Dans ce mode de réalisation, la paroi externe de la tête 11 de la quille 10 et la paroi interne de la jupe 40 présentent des portions complémentaires 90, 91 configurées pour coopérer de manière à permettre un clipsage de la jupe 40 sur la quille 10. Sur l'exemple illustré, ces portions complémentaires 90, 91 forment une protubérance à la surface de la paroi externe de la tête 11 de la quille 10 et une encoche de forme complémentaire portée par la paroi interne de la jupe 40.

Sur l'exemple de la figure 13, la gaine 110 est pincée entre la jupe 40 et la quille 10 au niveau de ces portions complémentaires 90, 91. Cela assure ainsi la retenue de la quille 10 sur la gaine 110. Ce pincement assure également l'étanchéité entre la quille 10 et la gaine 110.

Ainsi la fonction de fixation de la jupe 40 à la quille 10 est réalisée par les mêmes éléments que la fonction de retenue de la quille 10 sur la gaine 110.

Ce mode de réalisation est particulièrement peu onéreux à fabriquer et facile à assembler.

Le mode de réalisation de la figure 14 reprend les caractéristiques et avantages de celui de la figure 13 avec comme différence, que la quille 10 est suspendue à la gaine 110 par un joint 60 qui enserre la gaine 110 sur la tête 11 de la quille 10 au-dessus des portions complémentaires 90, 91. Ainsi la fonction de fixation de la jupe 40 à la quille 10 est réalisée de manière séparée de la fonction de retenue de la quille 10 sur la gaine 110. Cela permet également de renforcer l'étanchéité entre la gaine 110 et le canal 20 de la quille 10.

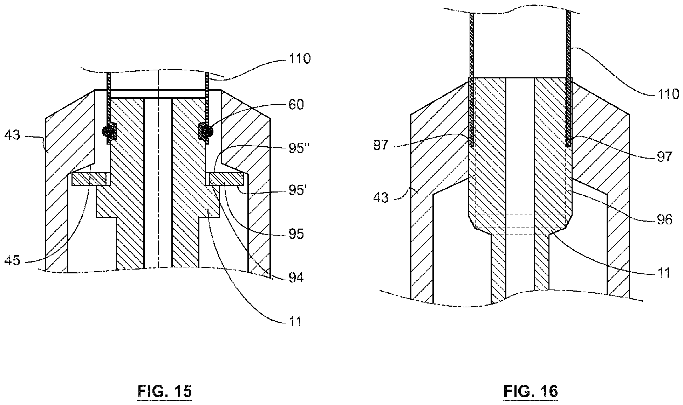

Un autre mode de réalisation de la fixation entre la quille 10 et la jupe 40 va maintenant être décrit en référence à la figure 15.

Dans ce mode de réalisation, un élément de butée 95, formé par une rondelle, est rapportée sur la quille 10. Cet élément de butée 95 forme une butée empêchant la jupe 40 de chuter par gravité. Une augmentation de diamètre de la quille 10 forme une surface 94 d'appui sur la quille 10 pour une face inférieure 95' de la rondelle. La rondelle présente un diamètre interne permettant son enfilement sur la tête 11 de la quille 10. La face supérieure 95" de la rondelle forme une butée sur laquelle s'appuie la jupe 40 au niveau d'une paroi interne 45 formant une réduction de son passage interne 46.

De préférence, on prévoit que la retenue de la quille 10 est assurée par un joint 60 qui enserre la gaine 110 autour de la tête 11 de la quille 10 au-dessus de l'élément de butée 95.

Ainsi la fonction de fixation de la jupe 40 à la quille 10 est réalisée de manière séparée de la fonction de retenue de la quille 10 sur la gaine 110.

Un autre mode de réalisation de la fixation entre la quille 10 et la jupe 40 va maintenant être décrit en référence à la figure 16.

Dans ce mode de réalisation, la paroi externe de la tête 11 de la quille 10 et la paroi interne de la jupe 40 présentent des filetages complémentaires 96, 97 configurés pour coopérer de manière à permettre un vissage de la jupe 40 sur la quille 10.

On peut prévoir que la gaine 110 soit pincée entre les deux filetages complémentaires 96, 97. Cela assure ainsi la retenue de la quille 10 sur la gaine 110. Ce pincement assure également l'étanchéité entre la quille 10 et la gaine 110.

Alternativement, selon un mode de réalisation non illustré on peut prévoir que la retenue de la quille 10 est assurée par un joint 60 qui enserre la gaine 110 sur la tête 11 de la quille 10 au-dessus des filetages 96, 97. Ainsi la fonction de fixation de la jupe 40 à la quille 10 est réalisée de manière séparée de la fonction de retenue de la quille 10 sur la gaine 110. Cela permet de renforcer l'étanchéité entre la gaine 110 et le canal 20 de la quille 10.

Ces modes de réalisation ont pour avantage que la jupe 40 ne reste pas coincée au passage des plaques 107, 108 et des grilles d'espacement dans le corps de l'évaporateur 100.

Comme illustré en figures 3a et 3b, l'extrémité inférieure de la quille 10 est située à l'intérieur de l'orifice 55 de collecte, qui dans cet exemple défini par l'extrémité supérieure du tube 50. Ainsi, cette extrémité inférieure de la quille 10 est verticalement située sous l'orifice 55 de collecte. Par conséquent, tout le premier fluide qui s'est condensé et qui s'écoule le long de la gaine 110 puis de la quille 10 est recueilli ensuite dans la chambre de collecte 142 du condensat.

Le diamètre externe de la quille 10, en particulier de son extrémité inférieure, est inférieur à la section de passage du tube 50. Un passage de fuite et ainsi ménagé entre la quille 10 et le tube 50. Ce passage de fuite permet à une partie au moins des gaz non condensés de s'échapper. Or, il a été identifié que le premier fluide ne comprend quasiment jamais uniquement de la vapeur mais comprend également des gaz non condensables tels que de l'oxygène et de l'azote. Ces gaz non condensables parviennent à l'intérieur des gaines 110 soit depuis l'extérieur par d'inévitables fuites du système, soit proviennent de gaz initialement dissous dans la solution à évaporer par exemple de l'eau de mer.

Ces gaz non condensés peuvent s'accumuler dans l'échangeur, notamment dans le fond des gaines 110 jusqu'à former un bouchon qui réduit, voire empêche la circulation de la vapeur, entraînant de ce fait une réduction du rendement du système.

En prévoyant un passage de fuite entre le tube 50 et la quille 10, l'invention évite toute formation de bouchon. Les gaz non condensables parcourent le système sans s'accumuler. Alors que l'on se serait attendu à avoir une baisse du rendement du système du fait de la fuite, le rendement au contraire augmente du fait de la disparition des bouchons de gaz non condensables.

De manière particulièrement avantageuse, le dispositif de connexion fluidique comporte une bague 30 rapportée sur une pièce prise parmi la quille 10 et le tube 50. La bague 30 est configurée pour définir avec l'autre parmi la quille 10 et le tube 50 un passage de fuite 80 pour l'évacuation d'une partie du premier fluide non condensé, sous forme gazeuse, provenant de l'extrémité inférieure 16 de la quille 10.

Ainsi, il suffit de choisir une bague 30 de section transversale adaptée afin d'adapter le débit de fuite. En disposant d'un jeu de bagues présentant des dimensions transversales différentes, on peut ainsi régler le débit de fuite afin qu'il soit suffisant pour permettre d'évacuer les gaz non condensables tout en étant suffisamment faible pour limiter le passage de vapeur depuis la gaine vers la chambre d'évaporation de manière à conserver un rendement satisfaisant.

Selon un mode de réalisation, la bague 30 est en plastique. Elle est formée d'un matériau rigide. Elle présente une zone de déformation qui permet d'agrandir ou de rétrécir son diamètre pour enfiler aisément la bague sur la quille ou l'introduire dans le tube. Selon un mode de réalisation alternatif non illustré, la bague 30 forme un manchon en élastomère. Elle présente donc une section continue. En déformant le manchon on peut aisément enfiler la bague 30 sur la quille 20.

Selon le mode de réalisation illustré aux figures 3a, 3b, 9, 10 et 11, la bague 30 est rapportée sur la quille 10. Le passage de fuite 80 est donc défini par le jeu entre le tube 50 et la bague 30. Ce passage de fuite 80 est surtout visible sur la figure 11 dont les dimensions sont exagérées pour faciliter la compréhension.

De préférence, l'extrémité inférieure 16 de la quille 10 comprend une gorge 17 circulaire conformée pour loger la bague 30. Ainsi, la mise en position et le maintien en position de la bague 30 sur la quille 10 est simple et plus fiable.

L'extrémité inférieure 16 de la quille 10 comporte également une réduction de diamètre externe 19 se prolongeant en direction de l'extrémité supérieure 15 par un chanfrein 18 jusqu'à présenter un diamètre constant plus large. Cette réduction 19 de section et ce chanfrein 18 permettent de faciliter l'insertion de la bague 30 sur la quille 10 depuis l'extrémité inférieure 16 de cette dernière.

Typiquement, le chanfrein 18 présente une inclinaison de 30°.

De préférence, la bague 30 et/ou l'extrémité inférieure 16 de la quille 10 présente une zone de fragilisation pour permettre une déformation élastique. Par exemple, une bague 30 et/ou la quille 10 est fendue afin de faciliter une déformation élastique de leur section, permettant de ce fait de faciliter leur assemblage mutuel.

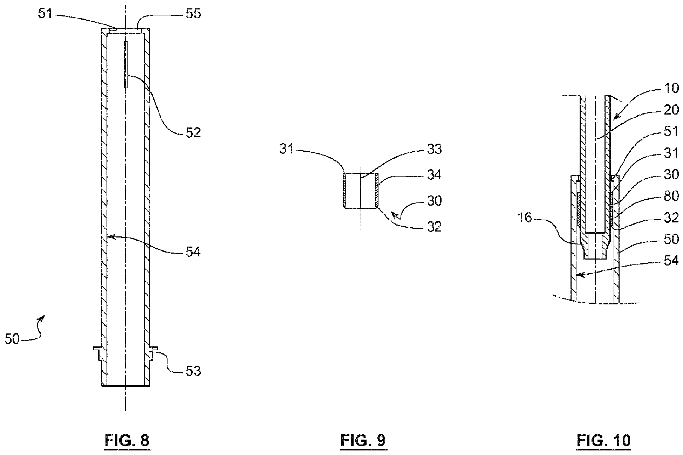

Sur l'exemple illustré sur la figure 9, la bague 30 présente une fente 33 qui s'étend sur toute la hauteur de la bague 30. Ainsi, le diamètre intérieur de la bague 30 peut être élastiquement augmenté, le temps d'enfiler cette dernière sur la quille 10. Par ailleurs, cela permet de prévoir qu'au repos le diamètre intérieur de la bague est égal au diamètre de la gorge 17, de manière à ce que la bague 30 soit montée serrée sur la quille 10 afin de renforcer son maintien.

Ainsi, la bague 30 vient se clipser sur la quille 10.

En position de repos de l'échangeur, c'est-à-dire à froid, la bague 30 est positionnée dans le tube 50 comme illustré en figure 3a.

Sous l'effet de la dilatation de la gaine 110 à chaud et éventuellement du fluage, la quille 10 descend dans le tube 50 comme illustré en figure 3b.

Les dimensions de la bague 30 sont calculées pour calibrer le débit de fuite entre le bord extérieur de la bague 30 et la paroi interne 54 du tube 50. Le jeu peut varier de quelques dixièmes de millimètres à un millimètre. Le tableau ci-dessous donne les dimensions de la bague 30 pour différentes températures de fonctionnement. Dans cet exemple, la bague 30 est adaptée pour s'insérer dans un tube 50 de 15 mm de diamètre intérieur. La colonne A indique le diamètre de la paroi externe 34 de la bague en millimètres. La colonne Tmax indique la température maximale de fonctionnement.

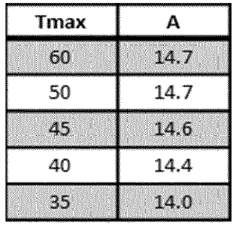

Le tube 50 présente de préférence des fentes 52 s'étendant depuis son extrémité supérieure et en direction de son extrémité inférieure. Typiquement, ces fentes sont au nombre de trois, réparties à 120° et présentent une longueur de 25 mm, une largeur de 1 mm pour un tube de 14,2 mm de diamètre interne. Ces fentes permettent de déformer élastiquement l'extrémité supérieure du tube 50, en l'augmentant, afin de faire passer la quille 10 et la bague 30 dans le tube 50.

De préférence, l'extrémité inférieure de la bague 30 présente un chanfrein 32 pour faciliter son introduction à travers l'orifice de collecte.

Selon un mode de réalisation optionnel et avantageux, l'orifice 55 de collecte comporte un rebord 51, tel une surépaisseur s'étendant radialement vers l'intérieur de l'orifice de collecte, c'est à dire dans cet exemple, vers l'intérieur du tube. L'orifice de collecte 55 présente ainsi une réduction de section.

La section de passage définie par cette réduction de section est inférieure à la section externe de la bague. Ainsi, lorsque la tige 12 et la bague 30 sont insérées dans le tube 50, ils ne peuvent pas s'en échapper puisque la bague 30 vient buter sur la réduction de section. De préférence, on prévoit que la bague 30 présente une extrémité supérieure 31 formant une surface de butée avec la réduction de section du tube 50 lors d'un mouvement de retrait de la tige 12 hors du tube 50. Cette surface est par exemple plane. Cela permet d'éviter que l'extrémité de la tige 12 ne se désengage involontairement de l'orifice de collecte 55.

Or, ce risque est présent, notamment lors du transport de l'échangeur lors de l'installation sur site de l'échangeur ou suite à un écart brutal de pression. Ce risque de déboîtement de la quille 10 est particulièrement élevé lors de la remise en route de l'échangeur.

Alternativement on prévoit en chanfrein au niveau de l'extrémité 31 afin de faciliter le démontage de la bague 10 hors du tube 50.

Les fentes 52 prévues sur le tube 50 permettent d'augmenter momentanément la section de l'orifice 55 afin d'insérer la bague 30 lors du montage ou de la sortir du tube 50 lors du démontage.

De manière particulièrement avantageuse et comme illustré en figure 11, on prévoit que :
- La paroi externe de la bague 30 soit inclinée. La bague présente ainsi au moins une surface externe conique 34.
- La paroi interne de l'orifice 55 de collecte, c'est-à-dire sur cet exemple la paroi interne 54 du tube 50, présente une inclinaison correspondant à l'inclinaison de la paroi externe 34 de la bague 30.

Ainsi, la section du passage de fuite prise transversalement, varie en fonction de la position verticale de la bague 30 à l'intérieur du tube 50.

Sur l'exemple illustré en figure 11, la surface conique 34 de la bague 30 et la section de passage se rétrécissent en direction du bas. Sur cette figure, les inclinaisons et la section du passage de fuite 80 sont exagérées pour faciliter la compréhension.

Ainsi, lorsque l'on descend la tige 12 dans le tube 50, par exemple sous l'effet d'une dilatation à chaud de la gaine 110, la section de passage de fuite diminue.

A l'inverse, lorsque la tige 12 remonte dans le tube 50, par exemple sous l'effet d'une rétractation de la gaine, c'est-à-dire à froid, la section du passage de fuite augmente.

On notera également que ce principe est applicable au cas où la bague 30 est portée par le tube 50 et non pas par la tige 12 de la quille 10.

En fonction de l'inclinaison des parois en regard qui définissent la section de passage de fuite, on peut ainsi régler la section de passage de fuite en fonction de la dilatation de la gaine 110 et donc de la température.

Il est donc possible de faire varier cette section de manière à rendre constant le débit de fuite en utilisant la dilatation de la gaine 110. Le rendement de l'évaporateur est ainsi amélioré puisque l'on évite les bouchons de gaz non condensables tout en limitant le débit de fuite à ce qui est acceptable.

Pour des dilatations de 50 à 25 mm qui sont des valeurs attendues pour un polymère compte tenu de la longueur à froid des gaines et des températures de fonctionnement d'un évaporateur à plusieurs étages, le tableau suivant donne la réduction du jeu bague-tube en fonction de l'angle adopté pour l'inclinaison des parois.

| Angle (°) | Réduction du jeu pour 50 mm de dilatation (mm) | Réduction du jeu pour 25 mm de dilatation (mm) |
|---|---|---|
| 0 | 0 | 0 |
| 0.2 | 0.17 | 0.09 |
| 0.4 | 0.35 | 0.17 |
| 0.6 | 0.52 | 0.26 |
| 0.8 | 0.70 | 0.35 |
| 1.0 | 0.87 | 0.44 |

Ainsi, on peut ainsi calibrer très finement le jeu de fuite. L'angle donné à la paroi interne 54 du tube 50 et à la paroi externe 34 de la bague 30 permet de faire varier automatiquement le jeu de fuite en fonction de la température. Cet angle peut être orienté dans un sens ou dans l'autre pour augmenter ou diminuer le jeu de fuite ce qui présente un avantage appréciable.

En effet, en inversant l'angle du tube et de la bague, on peut augmenter le jeu de fuite quand la gaine se dilate au lieu de le réduire. On introduit alors un degré de liberté supplémentaire pour calibrer la fuite de vapeur en fonction de la température et de l'écart de pression qui intervient dans la valeur de cette fuite.

De manière avantageuse, afin d'éviter que la jupe 40 ne flotte sur la solution accumulée sur le fond de la plaque inférieure 108, on prévoit au moins un canal traversant la paroi de la jupe 40. De préférence, ce canal 70 est un perçage pratiqué en haut de la portion inférieure 49 de la jupe 40, c'est-à-dire à proximité de la portion supérieure 48. Ce canal 70 est visible en figure 5. L'air présent au sein de la jupe 40 peut ainsi s'échapper, pour équilibrer les pressions à l'intérieur et à l'extérieur de la jupe et pour laisser monter la solution sans risque de flottaison de la jupe 40. On évite ainsi que la jupe 40 se désemboîte de la quille 10, en cas de remontée de la solution concentrée.

De préférence, le canal traversant 70 est un perçage incliné qui remonte vers le haut à travers la paroi de la jupe 40 et en direction de l'intérieur de la jupe 40. Cela permet d'éviter que le deuxième fluide qui s'écoule sur la paroi externe de la jupe 40 ne parvienne à l'intérieur de la jupe en empruntant le canal 70. De préférence, le perçage est incliné à 45°. L'inclinaison et le nombre de canaux 70 peuvent être librement adaptés.

Au vu de la description qui précède, il apparaît clairement que l'invention, notamment le dispositif de connexion fluidique présente les avantages suivants:
- Maintien des gaines 110 dans une position verticale, à l'aplomb de l'évacuation de condensats vers une boite de collecte telle que la chambre de collecte 142.
- Tension de la gaine 110 sous l'effet de son propre poids, du poids du film 114 d'eau qui ruisselle sur les faces internes 111 et externes 112, du poids de la quille 10 et de la jupe 40 et enfin de l'effet de fond correspondant à l'écart de pression ; l'effet de fond.
- Libre dilatation de chacune des gaines 110, de manière individuelle, sans remettre en cause les différentes fonctions notamment de conduction du condensat, d'étanchéité entre les premier et deuxième fluides à l'état liquide; la dilatation peut atteindre plusieurs pour cent.
- Evacuation du condensat formé à l'intérieur des gaines vers une boite de collecte, sans que celui-ci puisse s'échapper du côté où la pression est inférieure.
- Blocage du passage de la saumure vers le circuit des condensats,
- Création d'une fuite calibrée, donc contrôlée, de vapeur de chauffe vers le circuit saumure de manière à balayer convenablement les gaz incondensables, gaine 110 par gaine 110.
- Blocage de la partie mobile de la quille 10 à l'intérieur du tube 50 en position haute pour éviter son déboîtement, lors du transport par exemple ou suite à un écart brutal de pression.

Enfin les différentes pièces du dispositif de connexion fluidique en particulier la quille 10, la jupe 40 sont simples et peu onéreuses à fabriquer par moulage par injection par exemple.

De préférence toutes les pièces (la quille 10, jupe 40, bague 30, tube 50) sont en thermoplastique injecté ce qui permet de réduire leur coût d'obtention. Elles peuvent être en n'importe quel autre matériau, mis en forme par injection ou par usinage.

Selon un mode de réalisation particulier non illustré sur les figures on constitue un bourrelet sur l'extrémité de la gaine 110 pour bloquer celle-ci en cas de glissement. On peut pour cela réaliser le bourrelet par un système chauffant escamotable. Le moyen de chauffage est soit rayonnant soit une surface chaude avec revêtement anti-adhésif venant au contact de la matière à fondre.

La présente invention trouve pour application particulièrement avantageuse les procédés de concentration par évaporation en général et plus particulièrement les procédés de concentration d'eau de mer pour en extraire de l'eau douce. Elle présente pour avantage d'offrir de bons rendements même avec des températures et des pressions de fonctionnement relativement basses.

L'invention n'est pas limitée aux modes de réalisations précédemment décrits et s'étend à tous les modes de réalisation couverts par les revendications.

## Revendications

1. Echangeur (1) de chaleur comprenant au moins :
- une gaine (110), s'étendant principalement selon un axe vertical, formée au moins d'un matériau polymère, l'échangeur étant destiné à faire circuler à l'intérieur de la gaine (110) un premier fluide en partie au moins sous forme de vapeur et pour transférer une partie au moins de la chaleur du premier fluide à un deuxième fluide s'écoulant sur une paroi externe de la gaine (110), ce transfert de chaleur produisant une condensation d'une partie au moins du premier fluide sur la paroi interne de la gaine (110) et une évaporation d'une partie au moins du deuxième fluide;
- un orifice (55) de collecte verticalement situé sous une extrémité inférieure de la gaine (110) et configuré pour récupérer le premier fluide ayant condensé à l'intérieur de la gaine (110) ;
- un dispositif de connexion fluidique comprenant au moins :
- une quille (10) comprenant une tête (11) et une tige (12) s'étendant depuis la tête (11) et un canal (20) interne traversant la tête (11) et la tige (12); la tête (11) étant configurée pour être insérée à l'intérieur d'une extrémité de la gaine (110) ; une extrémité libre (16) de la tige (12) étant destinée à être insérée dans l'orifice (55) de collecte; la quille (10) étant configurée de manière à guider à travers son canal (20) interne le premier fluide condensé s'écoulant depuis l'extrémité de la gaine (110);
- le dispositif de connexion est configuré de manière à serrer la gaine (110) sur une paroi externe (13) de la tête (11) de la quille (10) de manière à assurer la retenue de la quille (10) sur la gaine (110) **caractérisé en ce qu'**il comprend une jupe (40) présentant un passage intérieur (46) configuré pour loger ladite extrémité inférieure de la gaine (110), la jupe (40) s'étendant le long d'une partie au moins du canal (20) interne de la quille (10) et étant configurée de manière à ce que le deuxième fluide s'écoulant sur la paroi externe de la gaine (110) s'écoule ensuite sur une paroi externe de la jupe (40) en étant maintenu à distance du canal (20) interne de la quille (10);
- le dispositif de connexion étant conformé de manière à ce que la jupe (40) soit retenue par la quille (10) ou par au moins un élément de butée (60, 95) rapporté sur la quille (10) de manière à empêcher la chute de la jupe (40) par gravité.

2. Echangeur selon la revendication précédente dans lequel :
- la quille (10) et la jupe (40) portent des parties complémentaires (90, 91) conformées pour coopérer de manière à permettre un clipsage de la jupe (40) avec la quille (10),
- et/ou dans lequel la quille (10) et la jupe (40) sont conformées pour coopérer par vissage.

3. Echangeur selon la revendication 1 comprenant un élément de butée (60, 95) rapporté sur la quille (10) et qui forme une butée pour la jupe (40) empêchant la chute de la jupe (40) par gravité.

4. Echangeur selon la revendication précédente dans lequel :
- l'élément de butée est un joint (60) serrant la gaine (110) de manière étanche sur la quille (10) et sur lequel vient buter la jupe (40) sous l'effet de la gravité,
- ou dans lequel l'élément de butée est une rondelle (95) dont une face inférieure (95') prend appui sur la quille (10) et dont une face supérieure (95") est au contact de la jupe (40).

5. Echangeur selon l'une quelconque des revendications précédentes, dans lequel le dispositif de connexion est conformé de manière à ce que la quille (10) coopère avec la jupe (40) de manière à empêcher la chute de la jupe par gravité et dans lequel le dispositif de connexion est configuré de manière à ce que lorsque la quille (10) et la jupe (40) sont en coopération la gaine (110) est pincée entre une paroi interne de la jupe (40) et une paroi externe (13) de la quille (10) de manière à bloquer la quille (10) et la jupe (40) sur la gaine (110).

6. Echangeur selon la revendication 1 dans lequel la quille (10) et la jupe (40) sont conformées de sorte qu'une translation relative de la jupe (40) par rapport à la quille (10) provoque un pincement de la gaine (110) entre une paroi interne du passage intérieur (46) de la jupe (40) et une paroi externe (13) de la quille (10) de manière à bloquer la quille (10) et la jupe (40) sur la gaine (110) et dans lequel au moins l'une parmi la paroi externe (13) de la tête (11) de la quille (10) et la paroi interne du passage intérieur (46) de la jupe (40) présente une réduction de section de manière à ce que la coopération entre la jupe (40) et la quille (10) fasse entrer en butée la réduction de section avec l'autre parmi la paroi externe (13) de la tête (11) de la quille (10) et la paroi interne du passage intérieur (46) de la jupe (40).

7. Echangeur selon l'une quelconque des revendications précédentes comportant au moins un joint (60) rapporté sur l'une parmi la paroi externe de la tête (11) de la quille (10) et une paroi interne du passage intérieur (46) de la jupe (40), le dispositif étant configuré de manière à ce que à la fois la paroi externe de la gaine (110) et à la fois la paroi interne du passage intérieur de la jupe (40) prennent appui sur le joint (60).

8. Echangeur selon l'une quelconque des revendications précédentes dans lequel le dispositif de connexion comprend au moins un joint (60) configuré de manière à serrer la gaine (110) sur la paroi externe (13) de la tête (11) de la quille (10) de manière à assurer la retenue de la quille (10) sur la gaine (110).

9. Echangeur selon l'une quelconque des revendications précédentes dans lequel :
- lorsque la jupe (40) et la quille (10) coopèrent, la tige (12) dépasse du passage intérieur (46) de la jupe (40),
- et/ou dans lequel la longueur entre l'extrémité inférieure de la tige (12) et l'extrémité inférieure de la jupe (40) est comprise entre 5% et 20% de la longueur de la jupe (40),
- et/ou dans lequel la jupe (40) comprend au moins un canal (70) traversant sa paroi, de préférence, le canal (70) est incliné en remontant en direction de l'intérieur de la jupe (40),
- et/ou dans lequel l'échangeur est configuré pour permettre, sous l'effet de la dilatation de la gaine (110), un déplacement relatif entre la quille (10) et l'orifice (55) de collecte le long d'un axe selon lequel la gaine (110) s'étend principalement.

10. Echangeur selon l'une quelconque des revendications précédentes dans lequel l'orifice (55) est formé par une entrée d'un tube (50) présentant une sortie en communication avec une chambre de collecte et dans lequel l'échangeur comprend une bague (30) rapportée sur une pièce prise parmi la quille (10) et l'orifice (55), la bague (30) étant configurée pour définir avec l'autre parmi la quille (10) et l'orifice (55) un passage de fuite (80) pour l'évacuation d'une partie du premier fluide non condensé provenant de la quille (10).

11. Procédé d'assemblage d'un échangeur selon l'une quelconque des revendications précédentes:
- enfiler la jupe (40) sur une extrémité de la gaine (110) à travers le passage intérieur (46) de la jupe (40) ;
- rendre libre l'accès à l'extrémité de la gaine (110) ;
- insérer la tête (11) de la quille (10) à l'intérieur de la gaine (110) ;
- ramener la jupe (40) sur la tête (11) de la quille (10) jusqu'à faire coopérer la quille (10) et la jupe (40) de manière à empêcher la chute de la jupe (40) par gravité.

12. Procédé selon la revendication précédente dans lequel :
- on ramène la jupe (40) sur la tête (11) de la quille (10) jusqu'à pincer la gaine (110) entre la jupe (40) et la quille (10),
- et/ou dans lequel après l'étape d'insertion de la tête (11) de la quille (10) à l'intérieur de la gaine (110) et avant de ramener la jupe (40) sur la tête (11) de la quille (10), disposer un joint (60) torique sur la paroi externe de la quille (10),
- et/ou dans lequel au cours de l'étape consistant à ramener la jupe (40) sur la tête (11) de la quille (10), on déplace la jupe (40) par rapport à la quille (10) jusqu'à ce que le joint (60) se loge dans une gorge pratiquée dans la paroi interne du passage intérieur (46) de la jupe (40).

13. Utilisation d'un échangeur selon l'une quelconque des revendications 1 à 10 pour dessaler de l'eau salée.

14. Évaporateur (100) de solution comprenant une pluralité d'échangeurs (1) selon l'une quelconque des revendications 1 à 10, configuré de manière à ce que le deuxième fluide soit un liquide qui s'écoule par gravité sous forme d'un film (114) le long de la paroi externe de la gaine (110) et de manière à ce que le premier fluide soit en partie en moins de la vapeur.

15. Système de concentration de solution comprenant une pluralité d'évaporateurs (100) selon la revendication précédente, et de préférence dans lequel les évaporateurs (100) sont disposés en série de manière à ce qu'une sortie sous forme de vapeur du deuxième fluide d'un premier évaporateur (100) soit injectée comme premier fluide dans un deuxième évaporateur (100) monté en série avec le premier évaporateur (100).

## Patentansprüche

1. Wärmetauscher (1), der zumindest enthält:
- eine Hülle (110), die sich im Wesentlichen entlang einer senkrechten Achse erstreckt und aus zumindest einem Polymermaterial gebildet ist, wobei der Wärmetauscher dazu bestimmt ist, im Inneren der Hülle (110) ein erstes Fluid zumindest teilweise in Form von Dampf umzuwälzen und zumindest einen Teil der Wärme des ersten Fluids an ein zweites Fluid zu übertragen, das an einer Außenwand der Hülle (110) strömt, wobei dieser Wärmeübertrag eine Kondensation zumindest eines Teils des ersten Fluids an der Innenwand der Hülle (110) und eine Verdampfung zumindest eines Teil des zweiten Fluids erzeugt;
- eine Sammelöffnung (55), die vertikal unter einem unteren Ende der Hülle (110) liegt und dazu ausgelegt ist, das erste Fluid aufzufangen, das innerhalb der Hülle (110) kondensiert ist;
- eine Strömungsverbindungsvorrichtung, die zumindest enthält:
- eine Stütze (10), die einen Kopf (11), eine sich von dem Kopf (11) ausgehend erstreckende Stange (12) und einen Innenkanal (20) enthält, der sich durch den Kopf (11) und die Stange (12) erstreckt; wobei der Kopf (11) dazu ausgelegt ist, in das Innere eines Endabschnitts der Hülle (110) eingeführt zu werden; wobei ein freies Ende (16) der Stange (12) dazu bestimmt ist, in die Sammelöffnung (55) eingeführt zu werden; wobei die Stütze (10) dazu ausgelegt ist, durch ihren Innenkanal (20) hindurch das kondensierte erste Fluid zu leiten, das von dem Ende der Hülle (110) abströmt,
- wobei die Verbindungsvorrichtung dazu ausgelegt ist, die Hülle (110) an einer Außenwand (13) des Kopfes (11) der Stütze (10) so zu verspannen, dass sie den Halt der Stütze (10) an der Hülle (110) sicherstellt,
**dadurch gekennzeichnet, dass**
er eine Schürze (40) enthält, die einen Innendurchgang (46) aufweist, der dazu ausgelegt ist, das untere Ende der Hülle (110) aufzunehmen, wobei die Schürze (40) sich entlang von zumindest einem Teil des Innenkanals (20) der Stütze (10) erstreckt und dazu ausgelegt ist, dass das über die Außenwand der Hülle (110) strömende zweite Fluid dann über eine Außenwand der Schürze (40) strömt und dabei im Abstand von dem Innenkanal (20) der Stütze (10) gehalten wird;
- wobei die Verbindungsvorrichtung so ausgelegt ist, dass die Schürze (40) von der Stütze (10) oder von zumindest einem Anschlagelement (60, 95) gehalten wird, das so an die Stütze (10) angesetzt ist, dass es die Schürze (40) daran hindert, durch Schwerkraft herunterzufallen.

2. Wärmetauscher nach dem vorangehenden Anspruch, wobei
- die Stütze (10) und die Schürze (40) komplementäre Teile (90, 91) tragen, die dazu ausgebildet sind, so zusammenzuwirken, dass sie ein Zusammenstecken von Schürze (40) und Stütze (10) gestatten,
- und/oder wobei die Stütze (10) und die Schürze (40) dazu ausgebildet sind, durch Verschrauben zusammenzuwirken.

3. Wärmetauscher nach Anspruch 1, enthaltend ein Anschlagelement (60, 95), das an die Stütze (10) angesetzt ist und einen Anschlag für die Schürze (40) bildet, welcher das Herunterfallen der Schürze (40) durch Schwerkraft verhindert.

4. Wärmetauscher nach dem vorangehenden Anspruch, wobei:
- das Anschlagelement eine Dichtung (60) ist, die die Hülle (100) in dichter Weise an der Stütze (10) verspannt und an welche die Schürze (40) unter der Wirkung der Schwerkraft anschlägt,
- oder wobei das Anschlagelement eine Scheibe (95) ist, die sich mit ihrer Unterseite (95') an der Stütze (10) abstützt und mit ihrer Oberseite (95") mit der Schürze (40) in Kontakt steht.

5. Wärmetauscher nach einem der vorangehenden Ansprüche, wobei die Verbindungsvorrichtung so ausgebildet ist, dass die Stütze (10) mit der Schürze (40) so zusammenwirkt, dass sie das Herunterfallen der Schürze durch Schwerkraft verhindert und wobei die Verbindungsvorrichtung so ausgelegt ist, dass dann, wenn die Stütze (10) und die Schürze (40) zusammenwirken, die Hülle (110) zwischen einer Innenwand der Schürze (40) und einer Außenwand (13) der Stütze (10) eingeklemmt wird, so dass die Stütze (10) und die Schürze (40) an der Hülle (110) gesichert werden.

6. Wärmetauscher nach Anspruch 1, wobei die Stütze (10) und die Schürze (40) so ausgebildet sind, dass eine relative Verschiebung der Schürze (40) gegenüber der Stütze (10) ein Einklemmen der Hülle (110) zwischen einer Innenwand des Innendurchgangs (46) der Schürze (40) und einer Außenwand (13) der Stütze (10) hervorruft, so dass die Stütze (10) und die Schürze (40) an der Hülle (110) gesichert werden, und wobei zumindest eine aus Außenwand (13) des Kopfes (11) der Stütze (10) bzw. Innenwand des Innendurchgangs (46) der Schürze (40) eine Querschnittverminderung aufweist, so dass das Zusammenwirken zwischen Schürze (40) und Stütze (10) die Querschnittverminderung mit der anderen aus Außenwand (13) des Kopfes (11) der Schürze (10) bzw. Innenwand des Innendurchgangs (46) der Schürze (40) in Anschlag bringt.

7. Wärmetauscher nach einem der vorangehenden Ansprüche, enthaltend zumindest eine Dichtung (60), die an eine aus Außenwand des Kopfes (11) der Stütze (10) bzw. Innenwand des Innendurchgangs (46) der Schürze (40) angesetzt ist, wobei die Vorrichtung so ausgelegt ist, dass die Außenwand der Hülle (110) und die Innenwand des Innendurchgangs der Schürze (40) sich zugleich an die Dichtung (60) anlegen.

8. Wärmetauscher nach einem der vorangehenden Ansprüche, wobei die Verbindungsvorrichtung zumindest eine Dichtung (60) enthält, die dazu ausgelegt ist, die Hülle (110) an die Außenwand (13) des Kopfes (11) der Stütze (10) so zu verspannen, dass der Halt der Stütze (10) an der Hülle (110) sichergestellt wird.

9. Wärmetauscher nach einem der vorangehenden Ansprüche, wobei
- dann, wenn die Schürze (40) und die Stütze (10) zusammenwirken, die Stange (12) aus dem Innendurchgang (46) der Schürze (40) vorsteht,
- und/oder die Länge zwischen dem unteren Ende der Stange (12) und dem unteren Ende der Schürze (40) zwischen 5 % und 20 % der Länge der Schürze (40) beträgt,
- und/oder die Schürze (40) zumindest einen Kanal (70) umfasst, der deren Wand durchsetzt, wobei vorzugsweise der Kanal (70) geneigt verläuft und in Richtung zum Inneren der Schürze (40) hin ansteigt,
- und/oder der Wärmetauscher dazu ausgelegt ist, unter der Wirkung der Ausdehnung der Hülle (110) eine relative Verlagerung zwischen der Stütze (10) und der Sammelöffnung (55) entlang einer Achse zu gestatten, in welcher die Hülle (110) sich im Wesentlichen erstreckt.

10. Wärmetauscher nach einem der vorangehenden Ansprüche, wobei die Öffnung (55) durch einen Einlass einer Röhre (50) gebildet ist, die einen Auslass in Verbindung mit einer Sammelkammer aufweist und wobei der Wärmetauscher einen Ring (30) enthält, der an ein Teil aus Stütze (10) bzw. Öffnung (55) angesetzt ist, wobei der Ring (30) dazu ausgelegt ist, mit dem anderen Teil aus Stütze (10) bzw. Öffnung (55) einen Leckdurchgang (80) für den Ablauf eines Teils des von der Stütze (10) kommenden, nicht kondensierten ersten Fluids zu definieren.

11. Verfahren zum Montieren eines Wärmetauschers nach einem der vorangehenden Ansprüche:
- Aufschieben der Schürze (40) auf ein Ende der Hülle (110) durch den Innendurchgang (46) der Schürze (40) hindurch;
- Freimachen des Zugangs zum Ende der Hülle (110);
- Einführen des Kopfes (11) der Stütze (10) in das Innere der Hülle (110);
- Zurückführen der Schürze (40) an den Kopf (11) der Stütze (10), bis die Stütze (10) und die Schürze (40) so zusammenwirken, dass sie das Herunterfallen der Schürze (40) durch Schwerkraft verhindern.

12. Verfahren nach dem vorangehenden Anspruch, wobei
- die Schürze (40) an den Kopf (11) der Stütze (10) zurückgeführt wird, bis die Hülle (110) zwischen der Schürze (40) und der Stütze (10) eingeklemmt wird,
- und/oder nach dem Schritt des Einführens von dem Kopf (11) der Stütze (10) in das Innere der Hülle (110) und vor dem Zurückführen der Schürze (40) an den Kopf (11) der Stütze (10), Anordnen eines O-Rings (60) an der Außenwand der Stütze (10),
- und/oder wobei im Laufe des Schritts, der darin besteht, die Schürze (40) an den Kopf (11) der Stütze (10) zurückzuführen, Verlagern der Schürze (40) bezüglich der Stütze (10), bis der O-Ring (60) in einer Nut aufgenommen wird, die in der Innenwand des Innendurchgangs (46) der Schürze (40) ausgeführt ist.

13. Verwendung eines Wärmetauschers nach einem der Ansprüche 1 bis 10 zum Entsalzen von Salzwasser.

14. Lösungsverdampfer (100), enthaltend eine Mehrzahl von Wärmetauschern (1) nach einem der Ansprüche 1 bis 10, der so ausgelegt ist, dass das zweite Fluid eine Flüssigkeit ist, die durch Schwerkraft in Form eines Films (114) entlang der Außenwand der Hülle (110) strömt, und dass das erste Fluid zumindest teilweise Dampf ist.

15. Lösungskonzentrationssystem mit einer Mehrzahl von Verdampfern (100) nach dem vorangehenden Anspruch, und wobei vorzugsweise die Verdampfer (100) in Reihe angeordnet sind, so dass ein Auslass in Form von Dampf des zweiten Fluids eines ersten Verdampfers (100) als erstes Fluid in einen zweiten Verdampfer (100) eingeleitet wird, welcher in Reihe mit dem ersten Verdampfer (100) angebracht ist.

## Claims

1. Heat exchanger (1) comprising at least:
- one duct (110), extending mainly along a vertical axis, formed at least of one polymer material, the exchanger being intended to make circulate inside the duct (110), a first fluid partially at least in steam form and to transfer at least one portion of the heat from the first fluid to a second fluid flowing over an outer wall of the duct (110), this heat transfer producing a condensation of at least one portion of the first fluid over the inner wall of the duct (110) and an evaporation of at least one portion of the second fluid;
- one collection orifice (55) vertically located under a lower end of the duct (110) and configured to recover the first fluid having condensed inside the duct (110);
- a fluidic connection device comprising at least:
- one keel (10) comprising a head (11) and a rod (12) extending from the head (11) and an inner channel (20) passing through the head (11) and the rod (12); the head (11) being configured to be inserted inside an end of the duct (110); a free end (16) of the rod (12) being intended to be inserted into the collection orifice (55); the keel (10) being configured so as to guide through the inner channel (20) thereof, the first condensed fluid flowing from the end of the duct (110);
- the connection device is configured so as to clamp the duct (110) on an outer wall (13) of the head (11) of the keel (10) so as to ensure the retaining of the keel (10) on the duct (110) **characterised in that** it comprises a sleeve (40) having an inner passage (46) configured to house said lower end of the duct (110), the sleeve (40) extending along at least one portion of the inner channel (20) of the keel (10) and being configured such that the second fluid flowing over the outer wall of the duct (110) then flows over an outer wall of the sleeve (40) by being maintained at a distance from the inner channel (20) of the keel (10);
- the connection device being shaped such that the sleeve (40) is retained by the keel (10) or by at least one abutment element (60, 95) returned on the keel (10) so as to prevent the falling of the sleeve (40) through gravity.

2. Exchanger according to the preceding claim, wherein:
- the keel (10) and the sleeve (40) carry complementary portions (90, 91) shaped to engage so as to make it possible for a clipping of the sleeve (40) with the keel (10),
- and/or wherein the keel (10) and the sleeve (40) are shaped to engage by screwing.

3. Exchanger according to claim 1 comprising an abutment element (60, 95) returned on the keel (10) and which forms an abutment for the sleeve (40) preventing the falling of the sleeve (40) through gravity.

4. Exchanger according to the preceding claim, wherein:
- the abutment element is a seal (60) clamping the duct (110) in a sealing manner on the keel (10) and on which the sleeve (40) abuts under the effect of gravity,
- or wherein the abutment element is a washer (95) of which a lower face (95') bears against the keel (10) and of which an upper face (95") is in contact with the sleeve (40).

5. Exchanger according to any one of the preceding claims, wherein the connection device is shaped such that the keel (10) engages with the sleeve (40) so as to prevent the falling of the sleeve through gravity and wherein the connection device is configured such that when the keel (10) and the sleeve (40) are engaged, the duct (110) is crimped between an inner wall of the sleeve (40) and an outer wall (13) of the keel (10) so as to block the keel (10) and the sleeve (40) on the duct (110).

6. Exchanger according to claim 1, wherein the keel (10) and the sleeve (40) are shaped such that a relative translation of the sleeve (40) with respect to the keel (10) causes a crimping of the duct (110) between an inner wall of the inner passage (46) of the sleeve (40) and an outer wall (13) of the keel (10) so as to block the keel (10) and the sleeve (40) on the duct (110), and wherein at least one from among the outer wall (13) of the head (11) of the keel (10) and the inner wall of the inner passage (46) of the sleeve (40) has a reduction in cross-section such that the engagement between the sleeve (40) and the keel (10) makes the cross-section reduction abut against the other from among the outer wall (13) of the head (11) of the keel (10) and the inner wall of the inner passage (46) of the sleeve (40).

7. Exchanger according to any one of the preceding claims comprising at least one seal (60) returned on one from among the outer wall of the head (11) of the keel (10) and an inner wall of the inner passage (46) of the sleeve (40), the device being configured such that both the outer wall of the duct (110) and the inner wall of the inner passage of the sleeve (40) bear against the seal (60).

8. Exchanger according to any one of the preceding claims, wherein the connection device comprises at least one seal (60), configured so as to clamp the duct (110) on the outer wall (13) of the head (11) of the keel (10) so as to ensure the retaining of the keel (10) on the duct (110).

9. Exchanger according to any one of the preceding claims, wherein:
- when the sleeve (40) and the keel (10) engage, the rod (12) exceeds the inner passage (46) of the sleeve (40),
- and/or wherein the length between the lower end of the rod (12) and the lower end of the sleeve (40) is between 5% and 20% of the length of the sleeve (40),
- and/or wherein the sleeve (40) comprises at least one channel (70) passing through the wall thereof, preferably, the channel (70) is inclined by raising in the direction of the inside of the sleeve (40),
- and/or wherein the exchanger is configured to make it possible, under the effect of the dilatation of the duct (110), a relative movement between the keel (10) and the collection orifice (55) along an axis according to which the duct (110) mainly extends.

10. Exchanger according to any one of the preceding claims, wherein the orifice (55) is formed by an inlet of a tube (50) having an outlet connected to a collection chamber and wherein the exchanger comprises a ring (30) returned on a part taken from among the keel (10) and the orifice (55), the ring (30) being configured to define with the other from among the keel (10) and the orifice (55), a leakage passage (80) for the evacuation of a portion of the first non-condensed fluid coming from the keel (10).

11. Method for assembling an exchanger according to any one of the preceding claims:
- threading the sleeve (40) on an end of the duct (110) through the inner passage (46) of the sleeve (40);
- making access free to the end of the duct (110);
- inserting the head (11) of the keel (10) inside the duct (110);
- bringing back the sleeve (40) onto the head (11) of the keel (10) until the keel (10) and the sleeve (40) are made to engage, so as to prevent the falling of the sleeve (40) through gravity.

12. Method according to the preceding claim, wherein:
- the sleeve (40) is brought back onto the head (11) of the keel (10) until crimping the duct (110) between the sleeve (40) and the keel (10),
- and/or wherein after the step of inserting the head (11) of the keel (10) inside the duct (110) and before bringing back the sleeve (40) onto the head (11) of the keel (10), arranging an O-ring (60) on the outer wall of the keel (10),
- and/or wherein during the step consisting of bringing back the sleeve (40) onto the head (11) of the keel (10), the sleeve (40) is moved with respect to the keel (10) until the seal (60) is housed in a recess made in the inner wall of the inner passage (46) of the sleeve (40).

13. Use of an exchanger according to any one of claims 1 to 10 to desalinise salted water.

14. Solution evaporator (100) comprising a plurality of exchangers (1) according to any one of claims 1 to 10, configured such that the second fluid is a liquid which flows through gravity in the form of a film (114) along the outer wall of the duct (110) and such that the first fluid is partially at least steam.

15. Solution concentration system comprising a plurality of evaporators (100) according to the preceding claim, and preferably wherein the evaporators (100) are arranged in series such that an outlet in the form of steam of the second fluid from a first evaporator (100) is injected as a first fluid into a second evaporator (100) mounted in series with the first evaporator (100).
